(19)

**Europäisches Patentamt**
**European Patent Office**
**Office européen des brevets**

(11) **EP 4 634 651 B1**

(12) **EUROPÄISCHE PATENTSCHRIFT**

(45) Veröffentlichungstag und Bekanntmachung des Hinweises auf die Patenterteilung:
**17.06.2026 Patentblatt 2026/25**

(21) Anmeldenummer: **23833611.9**

(22) Anmeldetag: **11.12.2023**

(51) Internationale Patentklassifikation (IPC):
**G01N 27/02** *(2006.01)*

(52) Gemeinsame Patentklassifikation (CPC):
**G01N 27/026; G01N 27/028**

(86) Internationale Anmeldenummer:
**PCT/EP2023/085211**

(87) Internationale Veröffentlichungsnummer:
**WO 2024/126422 (20.06.2024 Gazette 2024/25)**

(54) **VERFAHREN UND MESSSYSTEM ZUR AUSFÜHRUNG IMPEDANZSPEKTROSKOPISCHER MESSUNGEN**

METHOD AND APPARATUS FOR PERFORMING IMPEDANCE SPECTROSCOPY MEASUREMENTS

PROCÉDÉ ET APPAREIL DE MESURE SPECTROSCOPIQUE D'IMPÉDANCE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **12.12.2022 DE 102022133019**
**12.12.2022 DE 102022133018**

(43) Veröffentlichungstag der Anmeldung:
**22.10.2025 Patentblatt 2025/43**

(73) Patentinhaber: **Ilmsens GmbH**
**98693 Ilmenau (DE)**

(72) Erfinder: **SACHS, Jürgen**
**98528 Suhl (DE)**

(74) Vertreter: **Engel, Christoph Klaus**
**PATENTSCHUTZengel**
**Marktplatz 6**
**98527 Suhl (DE)**

(56) Entgegenhaltungen:
**WO-A1-2007/054700      US-A1- 2007 250 558**
**US-A1- 2017 071 552**

- **RADOGNA ANTONIO VINCENZO ET AL: "A Simulation Study of an Optimized Impedance Spectroscopy Approach for Gas Sensors", 2019 IEEE 8TH INTERNATIONAL WORKSHOP ON ADVANCES IN SENSORS AND INTERFACES (IWASI), IEEE, 13 June 2019 (2019-06-13), pages 142 - 147, XP033592269, DOI: 10.1109/ IWASI.2019.8791300**
- **LUCIANI GIULIA ET AL: "Energy-Efficient PRBS Impedance Spectroscopy on a Digital Versatile Platform", IEEE TRANSACTIONS ON INSTRUMENTATION AND MEASUREMENT, IEEE, USA, vol. 70, 25 November 2020 (2020-11-25), pages 1 - 12, XP011828234, ISSN: 0018-9456, [retrieved on 20201229], DOI: 10.1109/ TIM.2020.3040482**

EP 4 634 651 B1

**Beschreibung**

Die vorliegende Erfindung betrifft im Allgemeinen ein Verfahren und ein Messsystem zur Ausführung einer impedanzspektroskopischen Messung. Im Speziellen betrifft die Erfindung ein Verfahren zur Ausführung impedanzspektroskopischer Messungen, in einer zeitlich schnellen Abfolge, über ein sehr breites Frequenzspektrum sowie bei minimalem Datenumfang der Messwerte. Dem eigentlichen Messverfahren gehen vorzugsweise Schritte zur Referenzierung des eingesetzten Messgerätes voraus. Die Erfindung betrifft außerdem ein kalibrierfähiges Messgerät, mit welchem ein derartiges Verfahren ausführbar ist.

Bekannt sind unterschiedliche technische Möglichkeiten, Impedanzen an Testobjekten zu messen. Gemeinsam ist den üblichen Methoden, dass Testsignale erzeugt und deren Wirkungen auf das zu untersuchende Material als Messsignal erfasst werden. Dafür werden Messgeräte benötigt, welche diese Signale mit hoher Genauigkeit erfassen können. Die Erfindung beschäftigt sich zunächst mit den Aspekten derartiger Signalerzeugung und dateneffizienten Signalerfassung. Weiterhin beschäftigt sich die Erfindung mit einem Verfahren zur Kalibrierung von Messgeräten für impedanzspektroskopische Messungen.

Die Impedanz-Spektroskopie ist eine bekannte Methode, um das elektrische Antwortverhalten von festen und flüssigen Stoffen zu ermitteln. Aus den ermittelten Parametern können dann beispielsweise Rückschlüsse auf Materialzusammensetzung, Materialqualität etc. gezogen werden. Zur Durchführung einer impedanzspektroskopischen Messung wird das zu untersuchende Testobjekt einem schwachen elektrischen Wechselfeld ausgesetzt und der elektrische Widerstand gemessen, den das Testobjekt einem Stromfluss bei gegebener Frequenz des Wechselfeldes entgegenbringt. Der Widerstand hängt von vielerlei stoffinternen, molekularen und strukturellen Effekten ab, deren frequenzabhängige Auswirkungen über ein sehr breites Frequenzband bestimmbar sind. Um die Parameter des zu untersuchenden Materials möglichst vollständig zu erfassen, sind Messungen über ein extrem breites Frequenzspektrum erforderlich. Herkömmlich werden solche Messungen unter Verwendung von Sinussignalen ausgeführt, deren Frequenz schrittweise über das betreffende Frequenzband verändert wird. Dabei werden zwei Messkonzepte benutzt, die regelmäßig als Impedanz-Analyzer und Network-Analyzer bezeichnet werden. Für Frequenzen unterhalb 10 - 100 MHz kommen meist Impedanz-Analyzer zum Einsatz. Über 100 MHz werden zumeist Network-Analyzer verwendet. Typischerweise handelt es sich dabei um Laborgeräte, die nicht für den Einsatz als industrieller Sensor geeignet sind. Die Signalerzeugung ist aufwendig und verursacht eine große Messzeit, da die Messfrequenzen sequenziell durchfahren werden. Zudem benötigen diese Gerätekonzepte mindesten zwei Messempfänger, um eine Phasenbeziehung zwischen Anregungs- und Messsignal erfassen zu können.

Die Charakterisierung und Analyse der Zusammensetzung von Materialien bzw. allgemein von zu untersuchenden Substanzen (Testobjekten) mittels Impedanz-Spektroskopie gestattet kontinuierlich arbeitende Messverfahren bzw. Messsysteme, die nicht zerstörend arbeiten und keine Probenentnahme erfordern. Die Methode nutzt die materialspezifischen Transport- oder Verschiebemechanismen von freien oder gebundenen elektrischen Ladungsträgern. Aus makroskopischer Sicht wird das Verhalten der Ladungsträger durch die frequenzabhängige Permittivitätszahl $\underline{\varepsilon}(f)$ beschrieben. Die Permittivität (dielektrische Leitfähigkeit) einer Substanz ist eine komplexwertige Funktion, in Abhängigkeit von der Frequenz, die typischerweise als Produkt der Permittivität des Vakuums $\varepsilon_0$ und der relativen Permittivität $\underline{\varepsilon}_r(f)$ der betrachteten Substanz dargestellt wird. Komplexwertige Funktionen (also Betrag und Phase) werden im Weiteren durch unterstrichene Symbole wie z.B. $\underline{\varepsilon}(f)$ bezeichnet.

Größe und Frequenzabhängigkeit der Permittivität hängen vom betrachteten Material ab bzw. von dessen Zusammensetzung aus Grundstoffen, Verschmutzungen, Kontaminierung etc. Somit besteht bei der impedanzspektroskopischen Messung die Anforderung, aus der Messung der Permittivität rückwirkend auf die Zusammensetzung oder Qualität einer Substanz (Testobjekt) schließen zu können. Das erfordert die Lösung eines inversen Problems. Derartige Problemstellungen tendieren zu mehrdeutigen und widersprüchlichen Lösungen. Um dem entgegenzuwirken, sind so viel wie möglich und so vielschichtig wie möglich Informationen über das Testobjekt zu sammeln. Übertragen auf die Methode der Impedanz-Spektroskopie bedeutet dies, dass die Wechselwirkung eines elektrischen Feldes mit dem Testobjekt über ein möglichst breites Frequenzband beobachtet werden muss, um mehrere physikalische Wechselwirkungsmechanismen erfassen zu können. Im Fall der Impedanz-Spektroskopie beschränkt man sich regelmäßig auf Frequenzen des Mikrowellenbereiches und darunter. Innerhalb dieser Frequenzbereiche basieren die typischen Wechselwirkungen auf Relaxationsphänomenen mit spezifischen Relaxationszeiten. Die von Sensoren erfassten Messsignale müssen dafür sehr genau ausgewertet werden, wofür entsprechend langzeitstabile Messgeräte hoher Genauigkeit benötigt werden.

Die Permittivität ergibt sich aus der Wechselwirkung eines elektrischen Feldes mit einer Substanz. Die Frequenz des Feldes soll sich dabei über einen weiten Bereich erstrecken. Elektromagnetische Felder breiten sich mit einer endlichen Geschwindigkeit aus. Bei der Gestaltung einer geeigneten Messanordnung kommen grundsätzlich zwei Sensorkonfigurationen in Frage, die sich hinsichtlich der Relation ihrer geometrischen Abmessung in Bezug auf die Wellenlänge der verwendeten Testsignal unterscheiden. Betrachtet werden Ausführungsformen, bei denen die Elektrodenabmessungen wesentlich kleiner als die kleinste Wellenlänge im Testsignal sind, oder bei denen die Elektrodenabmessungen vergleichbar mit oder größer als die Wellenlänge sind.

Für den Fall, dass die Sensorabmessungen klein gegenüber der kleinsten zu erwartenden Wellenlänge des Anregungsfeldes (Testsignal) sind, kann man davon ausgehen, dass im gesamten Volumen des Testobjektes gleiche Feldstärken herrschen, das heißt es liegt der quasi-stationäre Fall vor. Über die Messung von Strom und Spannung kann der Leitwert einer Elektroden-anordnung, insbesondere in der Art eines Plattenkondensators ermittelt werden, woraus die gesuchte komplexe Permittivität berechnet werden kann. Zwischen dem messbaren Leitwert und der gesuchten Permittivität der Testsubstanz besteht eine einfache Proportionalität. Die Oberfläche der Sensor-Elektroden stellt zwangsläufig eine Störung der atomaren und molekularen Struktur des Testobjekts dar. Das hat zur Folge, dass sich die elektrischen Eigenschaften des Testobjekts in der Umgebung zur Elektrodenoberfläche anders ausbilden können als im Inneren eines ungestörten Volumens. Typische Erscheinungsbilder sind dielektrische Doppelschichten, Elektroden-Anhaftungen, Korrosion, Kontaktwiderstände etc. Solche Störungen könnten bei der Auswertung der Messsignale zwar berücksichtigt werden, indem den elektrodennahen Regionen und dem Volumen des Testobjekts individuelle Admittanzwerte zugewiesen werden. Die tatsächliche messbare Admittanz ergibt sich dann aus der Reihenschaltung aller Teiladmittanzen. In der Praxis ist eine unmittelbare Bestimmung der Volumenadmittanz, die ausschließlich durch die gesuchte Permittivität $\varepsilon_r$ bestimmt wird, unter Umständen infolge der Maskierung durch die Elektrodenadmittanzen nicht möglich. Zur Bestimmung der reinen Volumenadmittanz, kommt beispielsweise eine Vierelektrodenanordnung zur Anwendung, wobei zwischen den beiden äußeren Elektroden ein bekannter Strom zirkuliert und zwischen den beiden inneren Elektroden eine Spannung sehr hochohmig abgegriffen wird.

Das soeben erwähnte Verfahren ist auf relativ kleine Messvolumen beschränkt. Für eine Vergrößerung des Volumens in dem die Messsubstanz (Testobjekt) dem elektrischen Wechselfeld ausgesetzt ist, müssen die Elektrodenabmessungen vergrößert werden. In diesem Fall kann nicht mehr vom Verhalten eines Plattenkondensators ausgegangen werden. Stattdessen lässt sich das Systemverhalten besser durch einen Wellenleiter beschreiben, wobei sich aufgrund großer Längsausdehnung elektromagnetische Wellen entlang der Längsachse ausbreiten. Die Amplituden des elektrischen Feldes sind dann von Zeit und Ort abhängig. Andere Anordnungen und auch geometrische Strukturen mit größeren Dimensionen in anderen Raumachsen (z. B. Resonatoren) sind ebenso denkbar und dem Fachmann prinzipiell bekannt.

In der DE 10 2015 122 926 A1 sind ein Erfassungsverfahren und ein Erfassungssystem beschrieben. Das System umfasst einen Sensor zur Messung einer Resonanzimpedanzspektralantwort eines Spulen-Kondensator-Widerstands-(LCR)-Resonators.

Die DE 198 28 682 A1 beschreibt ein Verfahren zum Durchführen einer Kalibrierung eines Netzwerkanalysatorsystems. Dieses Verfahren sieht vor, dass für jedes Testtor des Netzwerkanalysatorsystems eine Anfangskalibrierung durchgeführt wird. Die Anfangskalibrierung wird mit außerhalb des Netzwerkanalysatorsystems angeordneten Kalibrierungsstandards sowie im Netzwerkanalysatorsystem befindlichen elektronischen Standards durchgeführt. Für die Anfangskalibrierung wird ein Zusatzgerät dem Netzwerkanalysator beigestellt, welches der Anwender am Anfang - also nach der Verschaltung von Netzwerkanalysator und Zusatzgerät - selbst zu kalibrieren hat. Weiterhin sieht das Verfahren vor, dass eine automatische Neukalibrierung durchgeführt wird.

Die US 2017/071552 A1 beschreibt ein Verfahren zur Ausführung einer impedanzspektroskopischen Messung mit einem Messgerät, welches im Messbetrieb an Sensorelektroden eines Testobjekts ein Messsignal abgreift. Dabei wird ein breitbandiges Testsignal in Form binärer Pseudo-Rausch-Folgen erzeugt und in das Testobjekt eingeprägt. Anschließend wird die Reaktion des angeregten Testobjekts erfasst und das empfangene Messsignal durch Fourier-Transformation verarbeitet.

Eine Aufgabe der Erfindung besteht ausgehend von der zuvor geschilderten Problemlage in der Bereitstellung eines verbesserten Verfahrens zur Ausführung einer impedanzspektroskopischen Messung. Dieses Verfahren soll es insbesondere gestatten, die impedanzspektroskopische Messung schneller als nach herkömmlichen Methoden, mit einfachen technischen Mitteln und vor allem über ein extrem breites Frequenzband auszuführen, sodass materialspezifische Parameter des Testobjektes mit hoher Genauigkeit bestimmbar sind.

Durch die vorliegende Erfindung wird ein hohes Nutzen-zu-Aufwand-Verhältnis angestrebt, welches insbesondere für industrielle Sensorik von Bedeutung ist. Als Nutzen ist hierbei die schnelle und präzise Messung über ein extrem breitbandiges Frequenzspektrum zu sehen, während der Aufwand die dazu nötige gerätetechnische Komplexität, den zu bewältigenden Datenstrom sowie den damit verbundenen Leistungsverbrauch betrifft.

Für ein besseres Verständnis der Erfindung werden zunächst einige wesentliche Erkenntnisse dargestellt, die der Erfindung zugrunde liegen. In vielen potenziellen Anwendungsfeldern, wie z. B. dem Inline-Monitoring von strömenden Flüssigkeiten, ist die Zeit zum Erfassen eines kompletten Impedanz-Spektrums sehr begrenzt. Das bringt herkömmliche Messverfahren (Impedance Analyzer, Network Analyzer) schnell an ihre Grenzen, da diese Geräte in sequenziellen Schritten den erforderlichen Frequenzbereich durchfahren, was zu einer lang andauernden Messung führt und außerdem aufwendige Sinus-Signalgeneratoren erfordert, die ein breitbandiges Frequenzband abdecken können. Ein Ansatz zur signifikanten Verringerung der Messzeit wird darin gesehen, das zu untersuchende Testobjekt gleichzeitig mit sehr vielen Frequenzen anzuregen. Dafür wird ein breitbandiges Testsignal benötigt, welches gleichzeitig alle Spektralkomponenten enthält; das Testsignal soll also eine große "Augenblicksbandbreite" aufweisen. Gleichzeitig muss aber sichergestellt werden, dass die Gesamtleistung des Testsignals bestimmte Werte nicht überschreitet, um Überhitzung oder Zerstörung des Testobjektes zu vermeiden. Die gesuchte Permittivität $\underline{\varepsilon}_r$ des Testobjektes (meist eine feste oder flüssige Substanz) ist ein Materialparameter, der nicht direkt gemessen werden kann. Eine messbare Größe ist z. B. die frequenzabhängige Admittanz $\underline{Y}(f) = j2\pi fC_0\underline{\varepsilon}_r$ eines Kondensators, dessen Dielektrikum durch die Messsubstanz gebildet ist. Geht man aus Gründen der Vereinfachung zunächst davon aus, dass die Permittivität des Testmaterials frequenzunabhängig ist, ergibt sich innerhalb des Frequenzbandes eine Variationsbreite der Admittanzamplitude, wobei die Variationsbreite des Messwertes in der gleichen Größenordnung wie die Variationsbreite der Frequenz liegt. Bei einem angestrebten Frequenzintervall von z. B. 12 Dekaden, würde man also ein Messgerät benötigen, welches eine Admittanz ebenfalls über 12 Größenordnungen messen kann. Da vorgabegemäß alle Frequenzen gleichzeitig auftreten sollen, ist eine Messbereichsumschaltung für das Admittanzmessgerät nicht möglich. Die präzise Messung einer Admittanz über 12 Dekaden in einem einzigen Messbereich ist mit heutigen Bauelementen physikalisch nicht möglich.

Die Erfindung gestattet es überraschenderweise, diese scheinbar widersprüchlichen Anforderungen trotzdem physikalisch und technisch zu erfüllen. Sie schafft damit völlig neue Messmöglichkeiten und Einsatzfelder für die impedanzspektroskopische Messung von Materialien bzw. Substanzen.

Ausgehend von diesen Überlegungen wird die o.g. Aufgabe durch ein Verfahren gemäß dem beigefügten Anspruch 1 sowie durch ein Messsystem gemäß Anspruch 12 gelöst. In den abhängigen Unteransprüchen sind bevorzugte Ausführungsformen genannt, wobei dies keine abschließende Aufzählung von Variationsmöglichkeiten darstellt.

Erfindungsgemäß wird in einem ersten Schritt ein breitbandiges Testsignal mit großer Augenblicksbandbreite erzeugt, welches in mehrere Testsignalanteile in Form binärer Pseudo-Rausch-Folgen zergliedert ist. Es gibt mehrere Möglichkeiten sehr breitbandige Signale zu erzeugen. Eine sehr einfache, kosteneffiziente und Leistung sparende Methode ist die Erzeugung von binären Pseudo-Rausch-Folgen, z. B. eine M-Sequenz. Nachfolgend wird die Erfindung unter Nutzung von M-Sequenzen als Testsignal beschrieben, die Anwendbarkeit anderer binärer (oder analoger) Pseudo- Rausch-Folgen ist damit aber nicht ausgeschlossen. Neben der Bezeichnung M-Sequenz ist auch die Bezeichnung MLBS (maximum length binary sequence) gebräuchlich. Die Erzeugung einer M-Sequenz ist bis zu hohen Frequenzen relativ einfach möglich, vorzugsweise indem ein stabiler Taktgenerator ein digitales, linear rückgekoppeltes Schieberegister (LFSR) anstößt. Ein solches Schieberegister besteht aus einer Anzahl $n$ von Flip-Flops, die geeignet rückgekoppelt sind, um eine M-Sequenz zu erzeugen (im Einzelnen: J. Sachs, Handbook of Ultra-Wideband Short-Range Sensing - Theory, Sensors, Applications. Berlin: Wiley-VCH, 2012). Mit $n$ wird auch die Ordnung der M-Sequenz bezeichnet.

Eine M-Sequenz ist ein periodisches Signal, dessen Periode aus scheinbar zufällig verteilten positiven und negativen Elementarimpulsen - so genannten Chips - besteht.

Die Anzahl $N$ der Chips pro Periode wird durch die Ordnung $n$ der M-Sequenz, also die Anzahl der Flip-Flops im LFSR, bestimmt:

$$N = 2^n - 1 \qquad\qquad (1)$$

Die Dauer eines Elementarimpulses wird durch die Taktrate des Generators festgelegt:

$$t_c = f_c^{-1} \qquad\qquad (2)$$

Die Dauer einer M-Sequenz Periode ist somit:

$$T_P = N \cdot t_c \qquad\qquad (3)$$

Unterzieht man eine M-Sequenz einer Fourier-Transformation erhält man ein Linienspektrum. Ein Signal mit einem Linienspektrum kann man auch als eine Überlagerung von mehreren Sinussignalen unterschiedlicher Frequenz verstehen; im vorliegenden Fall sind das die gewünschten Sinusfrequenzen

$$f_i = i \cdot \Delta f = \frac{i}{T_P} = \frac{i}{N} f_c; \qquad i = 0,1,2,3,\cdots \qquad\qquad (4)$$

Die Amplituden der entsprechenden Sinuskomponenten folgen dabei einer **sinc²**-Funktion. Es zeigt sich, dass alle Spektralkomponenten (Sinuskomponenten) mit Frequenzen kleiner $f_c/2$ nahezu die gleiche Leistung haben, während darüber liegende Spektralanteile immer schwächer werden. Für die Stimulation eines Testobjektes wären sie somit kaum noch geeignet. Daher werden gemäß einer bevorzugten Ausführungsform bei der Erzeugung des Testsignals alle Frequenzen größer $f_c/2$ ausgeschlossen. Um das auch praktisch garantieren zu können, werden die unerwünschten Spektralanteile durch ein Tiefpassfilter unterdrückt. Aus Gründen einer einfachen Darstellung wird nachfolgend von einem idealen Rechtecktiefpass mit der Grenzfrequenz $f_c/2$ ausgegangen.

Als Testsignal steht somit zunächst die M-Sequenz (oder eine vergleichbare binäre (analoge) Pseudo-Rausch-Folge) zur Verfügung, welche gleichzeitig über die Frequenzen

$$f_i = i \cdot \Delta f; \quad i = 1,2,3, \cdots \frac{N-1}{2} \qquad (5)$$

verfügt, ohne dass aufwendige Sweep-Vorgänge oder Frequenzregelschleifen benötigt werden. Die Frequenzlinie bei $i = 0$ wird nicht weiter berücksichtigt, da es sich um eine reine Gleichspannung handelt. Je nach geforderter relativer Bandbreite $b$ kann die nötige Länge des Schieberegisters gewählt werden. Im Falle der bevorzugten Tiefpassfilterung ist die Signalamplitude der M-Sequenz im Wesentlichen gleichmäßig über die gesamte Periode verteilt. Spannungsspitzen, die zu Überlastungen des Testobjektes oder zur Übersteuerung einer Messelektronik führen könnten, sind damit ausgeschlossen. Damit umfasst das Spektrum der M-Sequenz eine Anzahl von $N_F$ nutzbaren, nicht redundanten Spektrallinien

$$N_F = \frac{N-1}{2} = 2^{n-1} - 1 \qquad (6)$$

Die Verwendung von M-Sequenzen (oder vergleichbarer Pseudo-Rausch-Folgen) vereinfacht sowohl die Erzeugung des Testsignals als auch die Erfassung und Verarbeitung der am zu untersuchenden Testobjekt gewonnenen Messsignale, wie es sich aus der nachfolgenden Beschreibung ergibt.

Für die Erfindung ist es wesentlich, dass das Testsignal mit der gewünschten großen Bandbreite $b$ in mindestens zwei Testsignalanteile aufgeteilt wird, die in benachbarten Sub-Bändern liegen. Dazu werden mindestens zwei parallele Kanäle in einem Messsystem realisiert, die mit demselben Takt gespeist werden, jedoch die große Bandbreite $b$ auf ein vorbestimmtes engeres Frequenzband (Sub-Band) beschränken und dafür jeweils eine M-Sequenz bilden, die dann als Testsignalanteil zur Verfügung steht.

Im nächsten erfindungsgemäßen Verfahrensschritt werden die mehreren M-Sequenzen (oder vergleichbare Pseudo-Rausch-Folgen) zum Zweck der Messung einem Testobjekt eingeprägt, d. h. das Testobjekt wird von dem Testsignal angeregt, welches durch die mindestens zwei, vorzugsweise zahlreiche Testsignalanteile repräsentiert wird. Bei dem Testobjekt handelt es sich beispielsweise um eine feste oder flüssige Substanz, insbesondere eine hinsichtlich ihrer Parameter zu untersuchende Materialmischung. Solche Testobjekte sind regelmäßig in einer Messschaltung eingebettet.

Die Reaktion des Testobjekts auf das Testsignal (bzw. die Testsignalanteile) stellt das Messsignal dar, welches im nächsten Schritt in geeigneter Form zu erfassen ist. Als Methoden zur Messsignal-Erfassung kommen gemäß bevorzugten Ausführungsformen Nyquist Sampling, Interleaved Sampling oder Überabtastung mit vorzugsweise digitaler Tiefpassfilterung zum Einsatz. All diese Methoden erfordern die Bandbegrenzung des Testsignals auf die Hälfte der jeweiligen Taktrate des LFSR. Das wird durch ein Tiefpassfilter erreicht, welches prinzipiell an beliebiger Stelle zwischen LSFR und einem Analog/Digital-Wandler (ADC) angeordnet sein kann. Bei Überabtastung ist auch eine digitale Implementierung möglich, so dass analoge Filter entfallen können. Eine Aufteilung auf mehrere Filter ist ebenso möglich.

Die genannten und ähnliche Varianten der Messwerterfassung liefern einen Datenstrom von $N = 2^n - 1$ digitalisierten Spannungswerten pro Messung. Für die Weiterverarbeitung müssen die gewonnenen Messsignale einer Fourier-Transformation (im praktischen Fall einer FFT - Fast-Fourier-Transformation) unterzogen werden, um die spektrale Zusammensetzung des Messsignals zu erhalten. Dieses Vorgehen entspricht letztlich einer (virtuellen) Anregung des Testobjektes mit Sinussignalen (Testsignal).

Insbesondere die Baugruppen des LFSR und die erforderlichen Taktteiler, welche das Taktsignal unterteilen und den parallelen Kanälen zuführen, können als reale Schaltungen implementiert sein oder auch durch einen Algorithmus in einem frei programmierbaren Digital-Schaltkreis (z. B. FPGA oder DSP) abgebildet werden. Letzteres bleibt allerdings bei derzeit üblichen Bauelementen auf Taktraten unterhalb einiger 10 MHz beschränkt.

Bei Anwendung der erwähnten bevorzugten Bandbegrenzung lässt sich der technische Aufwand reduzieren und eine besonders stabile Arbeitsweise des Gesamtsystems sicherstellen, da alle zeitkritischen Teilkomponenten von einer gemeinsamen Taktquelle aus bedient werden können. Das Nyquist-Sampling Theorem besagt, dass die Taktrate des Analog/Digital-Wandlers (ADC) (mindestens) doppelt so groß sein muss wie die Bandbreite des Messsignals. Somit können im vorliegenden Fall LFSR und ADC vom gleichen Taktgenerator aus bedient werden. Das führt zu einer zeitlich strengen Kopplung zwischen Test- und Messsignal, so dass zur Phasenbestimmung kein (sonst üblicher) Referenzkanal benötigt wird. Das reduziert den technischen Aufwand, Stromverbrauch und Datenvolumen.

Wie oben dargelegt wurde, soll bei der impedanzspektroskopischen Messung (Hyper-Breitband-Messung) das Testobjekt, welches in eine Messumgebung eingebettet ist, mit Testsignalen in einem großen Frequenzbereich angeregt werden, nämlich über ein Frequenzband mit der relativen Bandbreite **b.** Für **b** können z. B. 8, 10 oder 12 Dekaden angenommen werden (b=[$10^8$ $10^{10}$ $10^{12}$]). Solche Signale können mit einem LFSR der Ordnung **_n_ = 28, 35 oder 41** erzeugt werden. Die Verkettung einer solchen Anzahl von Flip-Flops zu einem LFSR stellt technisch kein Problem dar. Die damit verbundenen Datenmengen, die pro Messung zu erfassen sind, ergeben sich für die drei Fälle zu 268 Millionen, 34 Milliarden oder 2.2 Billionen Messwerten zu je typischerweise 12 ... 16 Bit. Für ein herkömmliches SensorSystem wären dies - ohne Anwendung der Erfindung - nicht mehr handhabbare Datenmengen. Zusätzlich ist sicherzustellen, dass die Gesamtleistung des Testsignals im Allgemeinen 1 mW (in vielen Fällen sogar weniger) nicht überschreiten darf, um Beschädigungen am Testobjekt auszuschließen. Diese Leistung teilt sich gleichmäßig auf alle Spektrallinien auf, so dass in herkömmlichen Sensor-Systemen pro Spektralkomponente keine vernünftig messbare Leistung mehr zur Verfügung stehen würde.

Dieses Problem der Hyper-Breitband-Messung, mit seinen widersprüchlichen Anforderungen, wird durch das erfindungsgemäße Verfahren gelöst, indem die Verarbeitung auf Sub-Bänder aufgeteilt wird. Die Verarbeitung gewonnener Messsignale wird dafür kaskadiert bzw. parallelisiert, sodass man eine quasi-logarithmische Stufung der Spektrallinien des Test- oder Anregungssignals erhält. Zum begrifflichen Verständnis ist anzumerken: die Messkanäle, die zur Ausführung des erfindungsgemäßen Verfahrens genutzt werden, arbeiten parallel, sie sind aber frequenzmäßig kaskadiert. Innerhalb eines Sub-Bandes sind die Frequenzabstände äquidistant (also linear). Die Mittenfrequenzen der einzelnen Sub-Bänder sind aber logarithmisch skaliert, sodass von einer quasilogarithmischen Stufung gesprochen werden kann. Das bedeutet, dass bei tiefen Frequenzen der Abstand zwischen zwei Spektrallinien relativ klein ist, während bei hohen Frequenzen ihr Abstand immer größer wird. Da der Abstand der Spektrallinien einer M-Sequenz zwangsläufig immer äquidistant ist, lässt sich keine kontinuierliche Abstandsvergrößerung erreichen, sondern nur in Sprüngen - daher die Bezeichnung quasi-logarithmisch. Vorteilhaft führt dies zur Reduktion der Datenmenge und zur Erhöhung der Signalleistung je Spektrallinie im Vergleich zu einer rein linearen Skalierung der Messfrequenzen. Das resultierende Messsignal zeigt in diesem Sinne eine quasi-logarithmische Frequenzachse, die sich aus dem Zusammenspiel von Schieberegistern und Taktteilern ergibt.

Das bereits erwähnte Erfassen der Reaktion des angeregten Testobjekts erfolgt durch an das Testobjekt angepasste Sensoren. Jedem Kanal des Messsystems, welcher in der beschriebenen Weise in einem Sub-Band arbeitet, ist mindestens ein Sensor zugeordnet, welcher an den Frequenzbereich dieses Sub-Bandes angepasst ist. Dem Fachmann sind zahlreiche Sensoren bekannt, aus denen er eine Auswahl treffen kann. Jeder Sensor erfasst im zugehörigen Sub-Band jeweils am Testobjekt Teilmesssignale, die der weiteren Verarbeitung zugeführt werden. Sensor, das Testobjekt und ggf. weitere Baueinheiten, die für die Messsignalgewinnung benötigt werden, können in ihrer Gesamtheit als eine Messumgebung bezeichnet werden, die für jeden Kanal aufzubauen ist und von denen erfindungsgemäß mindestens zwei parallel arbeitende vorgesehen sind.

In einem nachfolgenden Verfahrensschritt werden die erfassten Teilmesssignale in parallelen Messkanälen parallel verarbeitet, nämlich durch eine Fourier-Transformation, vorzugsweise eine FFT. Abschließend werden die verarbeiteten Teilmesssignale zu einem endgültigen Messsignal zusammengesetzt, welches die Parameter des untersuchten Testobjekts repräsentiert. Das Messsignal besitzt eine quasi-logarithmische Frequenzachse und kann an weitere Einheiten ausgegeben werden und/oder auf einer Anzeigeeinheit zur Anzeige gebracht werden. Diese Maßnahmen führen zu einer enormen Reduzierung der Datenmenge und all den damit verbundenen Vorteilen bezüglich Messgeschwindigkeit, Hardwareaufwand, Rechen- und Speicheraufwand, Stromverbrauch etc.

Gemäß einer bevorzugten Ausführungsform umfasst das Verfahren zur Ausführung der impedanzspektroskopischen Messung einen vorgelagerten Verfahrensabschnitt, der zu einer weiteren Reduktion der Datenmenge und des Hardwareaufwandes führt. Dieser nutzt die Eigenschaft, dass durch die starre zeitliche Kopplung von Testsignalerzeugung und Messsignalerfassung ein zweiter Messkanal zur Phasenbestimmung, wie in traditionellen Impedanz-Messsystemen erforderlich, erfindungsgemäß entfallen kann. Somit muss nur noch die Amplitude des Testsignals in geeigneter Weise erfasst werden. Erfindungsgemäß wir dabei die im Folgenden beschriebene Verfahrensweise gewählt, wobei einleitend theoretische Grundlagen erläutert werden.

Admittanz (**_Y_**) und Impedanz (**_Z_**) sind Kehrwerte der gleichen physikalischen Größe. Ebenso lassen sich Reflektionsfaktor (**_Γ_**), dielektrische Permittivität (**_ε_**) oder elektrische Leitfähigkeit (**_σ_**) gegenseitig überführen, wobei im Allgemeinen eine spezielle Form der Möbius-Transformation zur Anwendung kommt (Ausnahme hiervon sind Konversionen zwischen $\varepsilon, \sigma \leftrightarrows Y, Z, \Gamma$ bei elektrisch großen Elektroden). All diese Begriffe können hier als gleichwertig betrachtet werden und werden im Weiteren unter dem Begriff Admittanz zusammengefasst.

Zur Messung der Admittanz gibt es mehrere, dem Fachmann bekannte Möglichkeiten, insbesondere:

- unmittelbare Messung von Strom und Spannung an der Admittanz;
- Messung der Diagonalspannung einer Wheatstone-Brücke;
- Messung der Spannung an einer Richtkoppler-Brücke;
- Auto-Balancing Bridge.

Als Messgröße tritt bei der Nutzung der zuvor genannten Verfahren zur Bestimmung der Admittanz immer eine Spannung auf, die z. B. über eine Referenzadmittanz in Relation zur Admittanz des Testobjektes steht. Falls die Messungen an Substanzen (Objekten) gleicher Art durchgeführt werden, kann das Verhalten der Referenzadmittanz an das Verhalten einer "typischen Testsubstanz" angepasst werden. Das führt dazu, dass die Messungen besonders sensitiv auf Änderungen der Testsubstanzen reagieren können. Als Referenzadmittanz können passive elektronische Netzwerke dienen oder eine zweite Messsonde, die in Kontakt mit einem typischen Referenzmaterial steht.

Die zuvor kursorisch beschriebenen Messschaltungen sind in der Lage, M-Sequenzsignale zu verarbeiten, wie sie als Testsignale bereitgestellt werden können, insbesondere in der oben bereits beschriebenen Weise. Der vorgelagerte Verfahrensabschnitt gestattet in besonders bevorzugter Weise eine einkanalige Admittanzmessung ohne explizite Bestimmung der Stärke des Anregungssignals bei gleichzeitiger Bestimmung technisch bedingter Unvollkommenheiten der Testsignalerzeugung und Messsignalerfassung.

Die erfassten Messsignale werden einer Fourier-Transformation unterzogen, so dass für jede Spektrallinie ein komplexer Messwert zur Verfügung steht. Für jede einzelne Frequenz lässt sich dann unabhängig von der konkreten Messschaltung bzw. der gesuchten Größe ($\underline{\varepsilon}$, $\underline{\sigma}$ , $\underline{Y}$, $\underline{Z}$, $\underline{\Gamma}$) allgemein für das idealisierte Verhalten des Sensorsystems schreiben:

$$\underline{V} = \underline{L} \cdot \underline{V_0} \qquad\qquad (7)$$

Man kann die Gleichung (7) als eine lineare Abbildungsvorschrift $\underline{L}$ einer Anregungsspannung $\underline{V_0}$ auf eine Messspannung $\underline{V}$ betrachten oder auch als die Beschreibung eines Signalpfades, bei dem $\underline{V_0}$ die Eingangsspannung und $\underline{V}$ die Ausgangsspannung darstellen und $\underline{L}$ ein Pfadgewicht ist, welches den Einfluss des Übertragungspfades beschreibt. Das Pfadgewicht $\underline{L}$ ist abhängig von der gesuchten Größe (z. B. Admittanz, Impedanz, Permittivität) und lässt sich meist durch eine Möbius-Transformation ausdrücken. Die spezifische Abhängigkeit bzw. die Koeffizienten der Möbius-Transformation richten sich dabei nach der verwendeten Messschaltung. Diese Betrachtungen gehen zunächst von einer idealen Messschaltung aus.

Für einen realen Messvorgang, bei welchem der Signalgenerator einen von Null verschiedenen Ausgangswiderstand hat, sowie das Voltmeter einen endlichen Eingangswiderstand, eine OffsetSpannung und einen Steigungsfehler hat, kann man formal ähnlich vorgehen - ein Anregungssignal $\underline{\check{V}_0}$ bewirkt vermittels eines Übertragungspfades $\underline{\check{L}}$ ein Messsignal $\underline{\check{V}}$

$$\underline{\check{V}} = \underline{\check{L}} \cdot \underline{\check{V}_0} \qquad\qquad (8)$$

Hierbei stellen die Größen mit dem Symbol $\check{X}$ die tatsächlich praktisch vorkommenden Größen an realen Messgeräten dar. Im Vergleich zum idealen Übertragungspfad $\underline{L}$ enthält der reale Übertragungspfad $\underline{\check{L}}$ das beabsichtigte Verhalten des idealen Pfades $\underline{L}$ und darüber hinaus auch alle Abweichungen des realen Gerätes infolge von Bauelementetoleranzen, parasitären Effekten etc. Wie sich diese Abweichungen konkret tatsächlich auf den Übertragungspfad auswirken, ist in praktischen Anwendungen im Einzelnen nicht bekannt und physikalisch nur schwer nachvollziehbar. Man zerlegt daher das reale Gerät gedanklich bzw. mathematisch in zwei Teile, indem man dem einen Teil das ideale Verhalten zuschreibt und dem anderen formal alle Abweichungen zum gewünschten Verhalten zuordnet.

Signalflusstechnisch stellt der zweite Teil ein sogenanntes Zwei-Tor (auch Fehler-Zwei-Tor) dar, welches durch vier Parameter vollständig beschrieben ist (lineares Verhalten der Messelektronik vorausgesetzt). Ein solches Zwei-Tor lässt sich beispielsweise in verschiedenen Matrix-Formen ausdrücken, die sich ineinander überführen lassen. Zwei Möglichkeiten davon sind nachfolgend genannt:

Signalflussform

$$\begin{bmatrix} \underline{\check{V}} \\ \underline{V_0} \end{bmatrix} = \begin{bmatrix} \underline{F_{11}} & \underline{F_{12}} \\ \underline{F_{21}} & \underline{F_{22}} \end{bmatrix} \cdot \begin{bmatrix} \underline{\check{V}_0} \\ \underline{V} \end{bmatrix} \qquad\qquad (9)$$

Ketten- oder Transmissionsform

$$\begin{bmatrix} \check{V}_0 \\ \check{V} \end{bmatrix} = \begin{bmatrix} \underline{T}_{11} & \underline{T}_{12} \\ \underline{T}_{21} & \underline{T}_{22} \end{bmatrix} \cdot \begin{bmatrix} \underline{V}_0 \\ \underline{V} \end{bmatrix} \tag{10}$$

Die Formel (8) kann damit detaillierter wie folgt geschrieben werden:

$$\check{\underline{V}} = \underline{L} \cdot \check{\underline{V}}_0 = \left( \underline{F}_{11} + \frac{\underline{F}_{21} \cdot \underline{L} \cdot \underline{F}_{12}}{1 - \underline{F}_{22} \cdot \underline{L}} \right) \check{\underline{V}}_0 = \left( \frac{\underline{F}_{11} - \Delta\underline{F} \cdot \underline{L}}{1 - \underline{F}_{22} \cdot \underline{L}} \right) \check{\underline{V}}_0 \tag{11}$$

Nach Formel (11) hängt also die tatsächlich gemessene Spannung $\check{\underline{V}}$ von der gesuchten Größe $\underline{L}$ und weiteren vier bislang nicht bekannten Größen $\underline{F}_{11}$, $\underline{F}_{22}$, $\Delta\underline{F}$ und $\check{\underline{V}}_0$ ab. Hierbei stellt $\check{\underline{V}}_0$ die Leerlaufspannung des Schieberegisters dar, welches die M-Sequenz erzeugt. Prinzipbedingt ist die Phase dieser Leerlaufspannung bezogen auf das Messsignal $\check{\underline{V}}$ bekannt. Ihre Amplitude kann zwar bezüglich ihres Wertes nicht genau benannt werden, sie kann aber über eine lange Zeit als konstant angesehen werden. Sie wird von der Betriebsspannung der Flipflops im Schieberegister bestimmt, welche sich gut stabilisieren lässt.

Erfindungsgemäß kann daher Formel (11) weiter zu einer Gleichung mit nur noch drei Unbekannten ($\underline{A} = \underline{F}_{11} \cdot \check{\underline{V}}_0$; $\underline{B} = \Delta\underline{F} \cdot \check{\underline{V}}_0$; $\underline{C} = \underline{F}_{22}$) zusammengefasst werden:

$$\check{\underline{V}} = \frac{\underline{A} - \underline{B} \cdot \underline{L}}{1 - \underline{C} \cdot \underline{L}} \tag{12}$$

Es sei angemerkt, dass es sich bei den Formeln (11) und (12) wieder um Möbius-Transformationen handelt.
Unter der Voraussetzung, dass die Größen $\underline{A}$, $\underline{B}$ und $\underline{C}$ bekannt sind, lässt sich der gesuchte Wert von $\underline{L}$ aus Formel (12) und der (einen) gemessenen Spannung $\check{\underline{V}}$ bestimmen:

$$\underline{L} = \frac{\underline{A} - \check{\underline{V}}}{\underline{B} - \underline{C} \cdot \check{\underline{V}}} \tag{13}$$

Auch dies ist wieder eine Möbius-Transformation. Da die Verkettung von zwei Möbius-Transformationen wieder eine Möbius-Transformation ist, ergibt sich für beliebige Messgrößen $\underline{X} = \underline{\varepsilon}$, $\underline{\sigma}$, $\underline{Y}$, $\underline{Z}$, $\underline{\Gamma}$ und beliebige Messschaltungen unmittelbar (Ausnahme: Bestimmung von $\underline{\varepsilon}$ oder $\underline{\sigma}$ über elektrisch große Sensoren):

$$\underline{X} = \frac{\underline{a} - \check{\underline{V}}}{\underline{b} - \underline{c} \cdot \check{\underline{V}}} \tag{14}$$

Der Berechnungsalgorithmus ist also unabhängig von der betreffenden Messgröße oder der Messschaltung. Lediglich die Parameter $\underline{a}$, $\underline{b}$, $\underline{c}$ oder $\underline{A}$, $\underline{B}$, $\underline{C}$ der Möbius-Transformation sind geeignet anzupassen.
Um diese Parameter bestimmen zu können, werden erfindungsgemäß in regelmäßigen, größeren Zeitabständen an mindestens drei geräteinternen Referenzelementen (die auch als interne Kalibrierelemente bezeichnet werden können) Messungen durchgeführt. Diese Referenzelemente sind typischerweise langzeitstabile Netzwerke (die auch als Referenznetzwerke bezeichnet werden können) aus passiven Komponenten (Widerstand, Spule, Kondensator) mit z.B. bekannter Admittanz $\underline{Y}_{li}$; $i = 1,2,3$. Zu diesem Zweck werden drei bekannte (interne) Referenzadmittanzen (die somit die internen Referenzelemente bilden) in unmittelbarer Umgebung zu den Sensorelektroden über einen Messstellenumschalter in den Messzweig eingeschaltet. Je nach verwendeter Messschaltung können daraus die zugehörigen Pfadwerte $\underline{L}_{li}$; $i = 1,2,3$ berechnet werden, die ein ideales Sensorsystem liefern würde. Tatsächlich ergeben sich nach Formel (12) aber die Messwerte zu:

$$\underline{\check{V}}_i = \frac{\underline{A} - \underline{B} \cdot \underline{L}_{Ii}}{1 - \underline{C} \cdot \underline{L}_{Ii}}, \quad i = 1,2,3 \qquad (15)$$

Das daraus resultierende Gleichungssystem (16) lässt sich für *A, B, C* lösen:

$$\begin{bmatrix} 1 & -\underline{L}_{I1} & \underline{L}_{I1} \cdot \underline{\check{V}}_1 \\ 1 & -\underline{L}_{I2} & \underline{L}_{I2} \cdot \underline{\check{V}}_2 \\ 1 & -\underline{L}_{I3} & \underline{L}_{I3} \cdot \underline{\check{V}}_3 \end{bmatrix} \cdot \begin{bmatrix} \underline{A} \\ \underline{B} \\ \underline{C} \end{bmatrix} = \begin{bmatrix} \underline{\check{V}}_1 \\ \underline{\check{V}}_2 \\ \underline{\check{V}}_3 \end{bmatrix} \qquad (16)$$

Zur Bestimmung der gewünschten Messgröße, z.B. der Admittanz, sind also zunächst mindesten drei Messungen an bekannten, internen Referenznetzwerken (Referenzelementen) durchzuführen, so dass über Gleichung (16) die Parameter *A, B, C* oder auch *a, b, c* bestimmt und abgespeichert werden können. Grundsätzlich sind diese drei Referenzmessungen nur einmal nötig, solange man davon ausgehen kann, dass sich das Verhalten der Messelektronik zeitlich oder durch Umwelteinflüsse nicht ändert. Da dies in der Realität nicht garantiert werden kann, ist es daher vorteilhaft, die Bestimmung der Parameter der Möbius-Transformation (13) oder (14) in regelmäßigen Abständen zu wiederholen.

Das hat einerseits zur Folge, dass die Genauigkeit und Reproduzierbarkeit der Messung nicht mehr von der Temperatur- und Alterungsanfälligkeit der Halbleiterschaltungen des Impedanzsensors abhängen. Vielmehr wird seine Messgenauigkeit von der Langzeitstabilität dreier passiver Netzwerke (interne Referenzelemente) bestimmt, die mit geringerem Aufwand stabil gehalten werden können als Halbleiterelemente. Andererseits können die einmal ermittelten Parameter *A, B, C* oder *a, b, c* für viele aufeinander folgende Messungen an Testobjekten mit unbekannter Admittanz verwendet werden. Damit lässt sich im Vergleich zu einem klassischen Zweikanal-Messverfahren die Menge der erfassten und zu bearbeitenden Daten nahezu halbieren, wenn viele Messungen zwischen zwei aufeinanderfolgenden Referenzzyklen stattfinden.

Die internen Referenznetzwerke (interne Kalibriernormale bzw. Referenzelemente) stehen somit jederzeit für eine ReKalibrierung bzw. Referenzierung oder Auffrischung der Parameter der Möbius-Transformation zur Verfügung, wenn die Genauigkeit des Messgeräts überprüft oder korrigiert werden soll. Die internen Referenznetzwerke (Referenzelemente) müssen dabei nicht besonders genau vorbestimmt sein, da sie erfindungsgemäß im Rahmen einer Anfangskalibrierung (im Regelfall eine Werkskalibrierung) und unter Verwendung externer Kalibrierelemente vermessen werden. Für die internen Referenzelemente eignen sich daher vergleichsweise preiswerte Bauelemente, die sich aufwandsarm in das Messgerät einbauen lassen. Diese Anfangskalibrierung kann sowohl beim Anwender als auch beim Hersteller der Impedanz-Messsysteme erfolgen. Dazu werden externe Kalibrierelemente benötigt, über die der Anwender typischerweise nicht verfügt. Eine Anfangskalibrierung beim Gerätehersteller ist daher zu bevorzugen, weshalb auch von einer Werkskalibrierung gesprochen wird, obwohl dies eine (oder mehrere) externe Anfangskalibrierung der Referenznetzwerke beim Anwender nicht ausschließt.

Die Wahl der drei internen Referenznetzwerke (Referenzelemente) kann prinzipiell frei bzw. angepasst an den konkreten Anwendungsfall erfolgen. Da sie die Reproduzierbarkeit und Genauigkeit der späteren Messungen am Testobjekt jedoch zu einem erheblichen Anteil bestimmen, müssen die Referenzelemente aber genau bestimmt werden (erreichbar durch die Werkskalibrierung) und langzeitstabil sein. Aus numerischen Gründen, zur Lösung der Gleichung (16), sollten sich die Messspannungen sowohl für alle drei Messungen an den internen Referenzelementen als auch bei den externen Kalibrierelementen in der komplexen Ebene möglichst gut voneinander unterscheiden.

Grundsätzlich wird mit der Kalibrierung das Verhalten der die Messsignale erfassenden Sensoren auf drei Referenznormale (interne Referenzelemente) bezogen, deren Genauigkeit und Langzeitstabilität letztlich die Reproduzierbarkeit und Vergleichbarkeit der Messergebnisse am jeweiligen Testobjekt bestimmen. Da sich infolge von Alterung und Umwelteinflüssen (insbesondere Temperatur und Feuchtigkeit) die Eigenschaften der Messelektronik ändern können, wäre für herkömmliche Messgeräte (ohne interne Referenzelemente) eine Wiederholung der Werkskalibrierung in regelmäßigen Abständen erforderlich. Bei Einsatz der Messgeräte an Industrieanlagen, d. h. außerhalb von Laboren, ist dies aber kaum möglich, da man Zugang zu den Sensorelektroden haben muss, der Messprozess unterbrochen werden muss, präzise Kalibriernormale zur Verfügung stehen müssen und geschultes Personal für die Werkskalibrierung nötig ist. Somit führt die erfindungsgemäße Einsparung eines zweiten Messkanals über geräteinterne Referenzmessungen zusätzlich zu einem Genauigkeitsgewinn, bei sorgfältiger Auslegung und Kalibrierung der internen Referenzelemente (Referenznetzwerke).

Die internen Referenzelemente und alle unbeabsichtigten Abweichungen im Verhalten der Messschaltung, die auf der Strecke zwischen den internen Referenzelementen (interne Referenzebene) und dem Messeingang (externe Kalibrierebene / Messebene) liegen können, werden durch eine einmalige Werkskalibrierung unter Nutzung von mindestens drei externen Kalibrierelementen bestimmt, gespeichert und in die später wiederkehrende Bestimmung der Parameter der Möbius-transformation mit einbezogen.

Das erfindungsgemäße Messsystem zur Ausführung einer impedanzspektroskopischen Messung an einem Testobjekt eignet sich insbesondere zur Ausführung des zuvor beschriebenen Verfahrens oder einer seiner Ausführungsformen. Das Messsystem umfasst zunächst einen Taktgenerator zur Erzeugung eines Taktsignals $f_c$ sowie mindestens einen Taktteiler, um das Taktsignal in mindestens zwei Taktsignalanteile zu unterteilen. Mindestens zwei parallel arbeitende Messkanäle, empfangen jeweils einen Taktsignalanteil. Jeder Messkanal arbeitet in einem eigenen Sub-Band, wobei die Frequenzbereiche der benachbarten Sub-Bänder aneinander angrenzen oder sich in den Grenzbereichen ggf. teilweise überdecken. Jeder dieser parallelen Messkanäle umfasst ein linear rückgekoppeltes Schieberegister (LFSR), welches aus dem Taktsignalanteil ein Teiltestsignal in Form einer binären Pseudo-Rausch-Folge erzeugt. Jeder Messkanal besitzt eine Messumgebung mit einem Sensor, der im Sub-Band des Messkanals am Testobjekt ein Teilmesssignal erfasst, sowie einen Analog/Digital-Wandler (ADC), der das Teilmesssignal wandelt. Schließlich besitzt das Messsystem eine Recheneinheit, welche die Teilmesssignale aus den Messkanälen empfängt und unter Anwendung einer parallelen Fourier-Transformation in ein Messsignal mit quasi-logarithmischer Frequenzachse zusammensetzt.

Die bevorzugt mit dem beschriebenen Verfahrensabschnitt zu kalibrierenden Messgeräte ermöglichen es, am Testobjekt messbare Eigenschaften zu erfassen, welche direkt mit der Permittivität, der Leitfähigkeit, der Impedanz, der Admittanz oder dem Reflektionsfaktor des Testobjektes in Verbindung stehen.

Weitere Vorteile, Einzelheiten und Abwandlungen der Erfindung ergeben sich aus der nachfolgenden Beschreibung bevorzugter Ausführungsformen, unter Bezugnahme auf die Zeichnung. Es zeigen:

Fig. 1    ein Blockschaltbild einer ersten Ausführungsform eines Hyper-Breitband-Messsystems mit kaskadierten/-parallelen Pseudo-Rausch-Einheiten zur Ausführung des erfindungsgemäßen Verfahrens;

Fig. 2    ein Blockschaltbild einer zweiten Ausführungsform des Hyper-Breitband-Messsystems mit kaskadierten/parallelen Pseudo-Rausch-Einheiten;

Fig. 3    ein Blockschaltbild einer dritten Ausführungsform des Hyper-Breitband-Messsystems mit zwei separat getakteten 2-Kanal-Analog/Digital-Wandlern;

Fig. 4    ein Schaltbild einer einfachen Ausführungsform einer Messschaltung zur Impedanz-/Admittanzmessung;

Fig. 5    eine schematische Darstellung der Verwendung von drei internen Referenznetzwerken für eine Zwei-Elektroden-Messschaltung;

Fig. 6    eine schematische Darstellung der Verwendung von drei internen Referenznetzwerken für eine Vier-Elektroden-Messschaltung;

Fig. 7    einen Signalflussgraph eines realen Impedanzsensors, der virtuell in ein ideales Messsystem und ein Fehler-Zwei-Tor zerlegt wurde;

Fig. 8    eine schematische Darstellung der Zerlegung des Fehler-Zwei-Tors in zwei Teilkomponenten;

Fig. 9    eine schematische Darstellung des Fehler-Zwei-Tors einer internen Referenzmessung, erweitert auf das vollständige Fehler-Zwei-Tor;

Fig. 10    eine schematische Darstellung einer Konversion der internen Referenzmessung auf eine Kalibrierung an der Messebene;

Fig. 11    eine Ausführungsform eines Messgerätes für ein elektrodennahes Schaltungsumfeld mit einer internen Referenzeinheit.

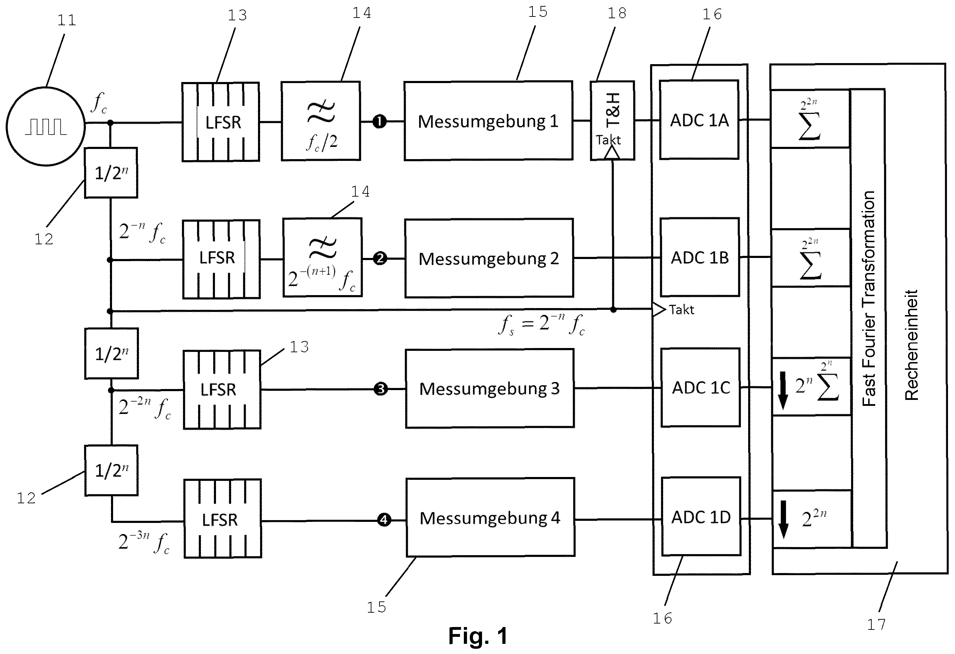

Fig. 1 zeigt in einem vereinfachten Blockschaltbild eine erste Ausführungsform eines Hyper-Breitband-Messsystems, welches sich für die Ausführung des erfindungsgemäßen Verfahrens eignet. Gerätetechnisch betrachtet, umfasst das Messsystem ein Messgerät und jeweilige Messumgebungen, die ein Testobjekt enthalten. Das Messsystem nutzt eine Kaskadierung bzw. Parallelschaltung von Pseudo-Rausch-Einheiten. Die gewünschte quasi-logarithmische Frequenzskalierung wird erreicht, indem das zu erfassende Frequenzband $b$ in $K$ Sub-Bänder aufgeteilt wird:

$$b = b_0^K \hspace{4cm} (17)$$

Zur Vereinfachung wird hier nur eine gleichmäßige Aufteilung auf die verschiedenen Sub-Bänder betrachtet; durch eine geeignete Wahl der LFSR-Ordnung und der Teilerfaktoren lassen sich aber auch andere Kombinationen bzw. Verteilungen erzeugen.

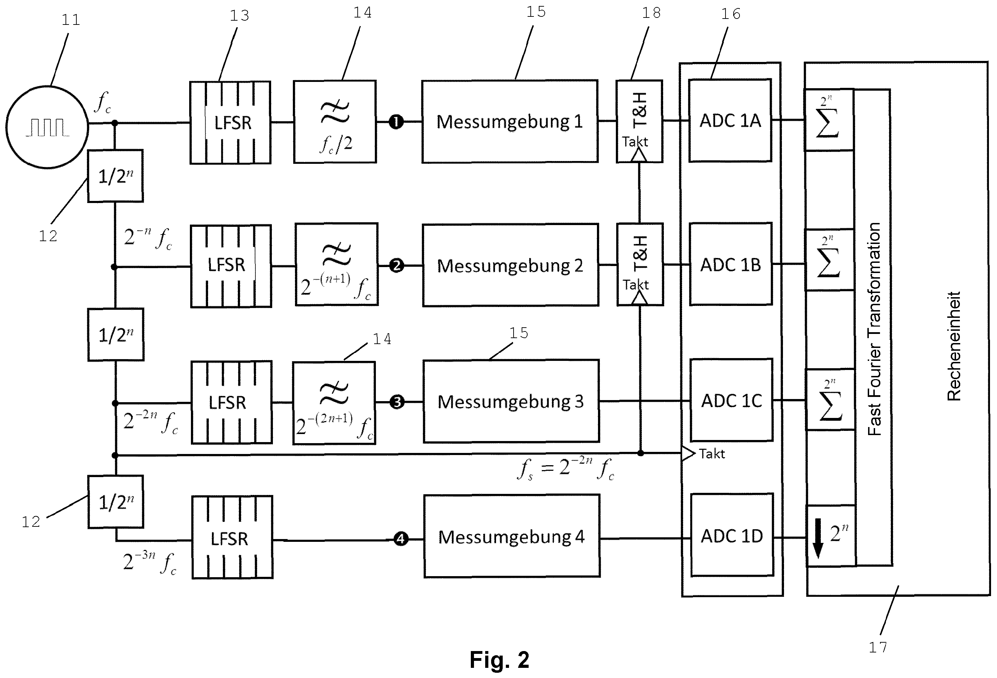

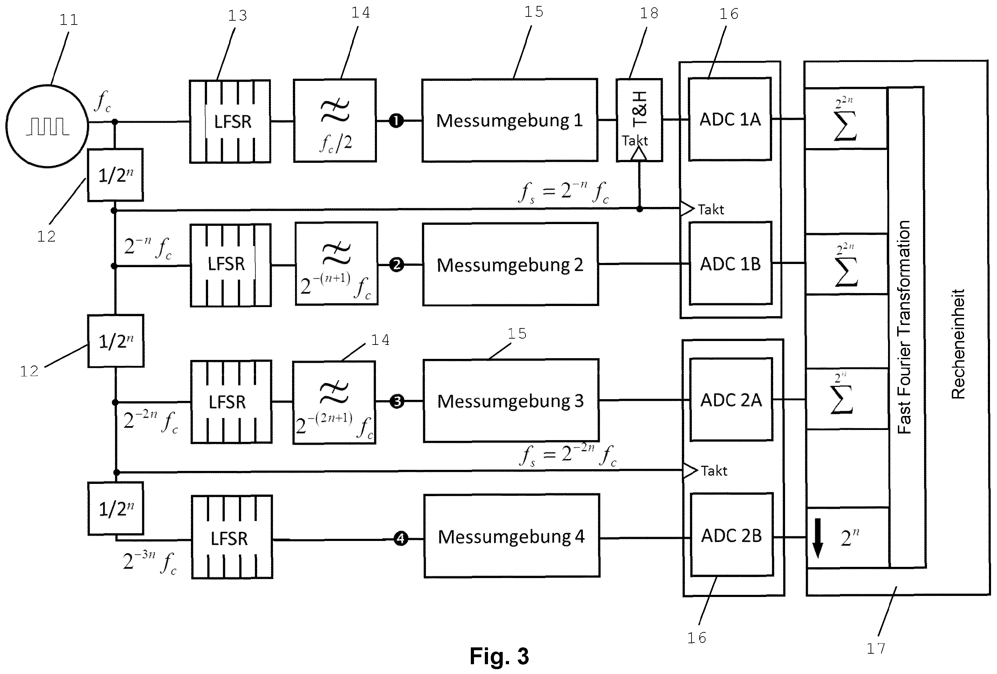

In der gezeigten Ausführungsform ist $K = 4$ gewählt. Ein Taktgenerator 11 stellt ein Taktsignal mit einer Taktfrequenz $f_c$ bereit, welche nachfolgend, teils über Taktteiler 12, an die vier parallelen Messkanäle ❶❷❸❹ bereitgestellt wird. Jeder Messkanal besitzt ein linear rückgekoppeltes Schieberegister 13 (LFSR), welches aus einer Anzahl $n$ von Flip-Flops besteht, die geeignet rückgekoppelt sind, um eine M-Sequenz zu erzeugen. Die Taktteiler 12 sorgen dafür, dass jedes LFSR 13 in einem anderen Sub-Band arbeitet. Innerhalb eines Sub-Bandes ist der Abstand zwischen den Spektrallinien äquidistant. Für jedes Sub-Band wird ein separater Messkanal genutzt. Die vom LFSR erzeugte binäre Pseudo-Rausch-Folge wird bevorzugt durch je einen angepassten Tiefpassfilter 14 gefiltert und nachfolgend jeweils einer Messumgebung 15 zugeführt. Die Tiefpassfilterung kann je nach Ausführungsform vor oder nach dem Mess- bzw. Testobjekt (der Messumgebung) vorgenommen werden. Im Falle einer Überabtastung kann sie auch digital realisiert werden und Bestandteil des Down-Sampling sein. Deshalb fehlen die Filterblöcke in den Kanälen ❸ und ❹ in Fig. 1 sowie im Kanal ❹ in den Fig. 2 und 3. Bei hohen Messfrequenzen, also dort wo Unterabtastung oder Nyquist-Sampling angewandt wird, muss die Tiefpassfilterung durch analoge Filter erfolgen. Jede Messumgebung umfasst das Testobjekt, einen Sensor und weitere zur Durchführung der Messung erforderliche Baueinheiten.

Die Signalerzeugung ist technisch wenig aufwendig und ermöglicht eine zeitparallele Messung über alle Frequenzen. Man benötigt hierzu $K$-Sensorelektroden, die Bestandteil der jeweiligen Messumgebung 15 sind und vorzugsweise räumlich dicht zueinander platziert werden, insbesondere wenn eine räumliche Inhomogenität des zu untersuchenden Testobjekts zu erwarten ist. Dabei müssen die verschiedenen Sensorelektroden nicht zwangsläufig identisch aufgebaut sein. Jede Messumgebung 15 liefert für das jeweilige Sub-Band ein Teilmesssignal, welches über jeweils einen zugeordneten Analog/Digital-Wandler 16 (ADC) einer Recheneinheit 17 zugeführt wird, in welcher die Teilmesssignale einer parallelen (Fast) Fourier-Transformation unterzogen und zu einem endgültigen Messsignal zusammengefügt werden. Die ADC 16, die alle oder in Gruppen zu einem Multi-Kanal-ADC zusammengefasst sein können, werden bevorzugt vom selben Taktsignal gespeist, wie eines der LFSR 13.

Zur Erläuterung der Funktionsweise soll beispielhaft von einfachsten Bedingungen ausgegangen werden, wie folgt:

- alle LFSR sind von gleicher Ordnung $n$;
- alle Taktteiler sind ebenfalls von der Ordnung $n$;
- ein Multi-Kanal ADC erfasst parallel alle Teilmesssignale; er wird mit der Frequenz $f_s$ getaktet;
- die Messwerterfassung in allen Sub-Bändern (Messkanälen) umfasst die gleiche Zeitdauer $T_R$.

Fig. 1 zeigt eine 4-kanalige Ausführungsform, wobei in jedem Messkanal die Taktrate des dazugehörigen LFSR 13 um den Faktor $2^n$ reduziert wird. Durch die gleiche Ordnung aller LFSR 13 wird in allen vier Kanälen die gleiche Anzahl nutzbarer Spektrallinien erzeugt, wobei sich deren Frequenzlage und Abstand aber mit jeder Stufe verringert.

Bevorzugt ist vor dem ADC 17 im Messkanal ❶ eine Track and Hold (T&H) Schaltung 18 vorgesehen, insbesondere wenn die analoge Eingangsbandbreite des AD-Wandlers nicht groß genug für die Bandbreite der M-Sequenz ist. Typischerweise ist das im Betriebsmodus Unterabtastung der Fall.

In der nachfolgenden Tabelle 1 sind die Frequenzen aller auftretenden Spektrallinien zusammengefasst und an Beispielen der Frequenzumfang der einzelnen Kanäle illustriert. Dabei wird von einer Taktrate von $f_c$ = 10 $GHz$ ausgegangen.

**Tabelle 1:**

| Kanal | Spektrallinien | | | $n = 5$ | $n=9$ |
|---|---|---|---|---|---|
| ⓚ | $[1,2,3\cdots 2^n-1]\dfrac{f_c}{(2^n-1)\cdot 2^{n(K-1)}}$ | | | | |
| ❹ | $[1,2,3\cdots 2^n -1]\dfrac{f_c}{(2^n-1)\cdot 2^{3n}}$ | $f_{min}$ | | 9.8 KHz | 145 mHz |
| | | $f_{max}$ | | 148 KHz | 37 Hz |
| ❸ | $[1,2,3\cdots 2^n -1]\dfrac{f_c}{(2^n-1)\cdot 2^{2n}}$ | $f_{min}$ | | 315 KHz | 75 Hz |
| | | $f_{max}$ | | 4.7 MHz | 20 KHz |
| ❷ | $[1,2,3\cdots 2^n -1]\dfrac{f_c}{(2^n-1)\cdot 2^{n}}$ | $f_{min}$ | | 10 MHz | 38 KHz |
| | | $f_{max}$ | | 151 MHz | 10 MHz |
| ❶ | $[1,2,3\cdots 2^n-1]\dfrac{f_c}{(2^n-1)}$ | $f_{min}$ | | 320 MHz | 20 MHz |
| | | $f_{max}$ | | 4.8 GHz | 5 GHz |
| Relative Bandbreite | $b = 2^{nK-1}$ | | | 5 10⁵ | 3.4 10¹⁰ |
| Datenumfang | $N_{HW} = K(2^n - 1)$ | | | 124 | 2044 |
| Anzahl Spektrallinien | $N_{F,HW} = K(2^{n-1}-1) \approx \dfrac{1}{2}N_{HW}$ | | | 60 | 1020 |

EP 4 634 651 B1

12

Aus den Beispielen in Tabelle 1 wird der Vorteil einer Aufspaltung in Sub-Bänder ersichtlich. In einem einstufigen bzw. 1-kanaligen Verfahren (also nur eine M-Sequenz-Stufe) müssten z. B. für eine relative Bandbreite von $b = 5 \cdot 10^5$ eine Anzahl von $N \approx 10^6$ Messwerten erfasst werden, wenn die Erfindung nicht zum Einsatz kommt. Stattdessen müssen erfindungsgemäß nur $N_{HW} = 124$ beim 4-kanaligen Verfahren erfasst werden. Mit zunehmender Bandbreite wird die Verbesserung immer deutlicher, denn anstelle von $N \approx 6.8 \cdot 10^{10}$ Datensamples zur Realisierung einer relativen Bandbreite von $b = 3.4 \cdot 10^{10}$ in einer Stufe, müssen nur $N_{HW} = 2044$ Spannungswerte im 4-kanaligen Verfahren erfasst werden.

Bezüglich der Messwerterfassung wird in der Ausführungsform gemäß Fig. 1 davon ausgegangen, dass dafür ein 4-kanaliger ADC zur Verfügung steht, dessen Eingangsspannungen typischerweise alle mit der gleichen Taktrate erfasst werden (ein zeitlicher Versatz der Messwerterfassung zwischen den Kanälen würde dabei keine Rolle spielen; eine zeitgleiche Erfassung ist also nicht nötig). Da die höchste zu messende Frequenz etwa 5 GHz betragen soll, wäre im Messkanal ❶ des erfindungsgemäß arbeitenden Hyper-Breitband-Messsystems eine Abtastrate von 10 GHz für den ADC gefordert. Der dazu nötige ADC wäre technisch aufwändig und man entscheidet sich deshalb in dieser Stufe für ein sequenzielles Sampling (Unterabtastung, im allgemeinen Fall für ein interleaved Sampling). Für den Fall $n = 9$ führt das zu einer tatsächlichen Abtastrate des ADCs von $f_s = 2^{-9} \cdot f_c \approx 20\ MHz$, die auch der Taktrate des Schieberegisters im Messkanal ❷ entspricht. ADCs für diese Messrate sind kommerziell verfügbar.

Da diese Taktrate auch für alle weiteren Kanäle des ADCs gilt, arbeitet der Messkanal ❷ im Modus "Nyquist-Sampling" und die Kanäle ❸ und ❹ arbeiten im Modus "Over-Sampling" (Überabtastung). Bei den im Modus "Over-Sampling" arbeitenden Kanälen, wird vorausgesetzt, dass die Bandbegrenzung auf digitaler Seite durch das Down-Sampling übernommen wird, so dass auf analoge Filter verzichtet werden kann. Weiterhin ist zu bemerken, dass die Zeit $T_{R4} = T_{P4} = (2^n - 1) \cdot 2^{3n} \cdot f_c^{-1}$ zum Erfassen aller Datensamples im Kanal ❹ am längsten dauert. Sie entspricht der Periodendauer der M-Sequenz mit der niedrigsten Taktrate. Aus praktischer Sicht ist es sinnvoll, dass alle Messkanäle über eine gleiche Messzeit arbeiten und nur die physikalisch sinnvollen Datensamples einer Weiterverarbeitung, z. B. Fourier-Transformation, zugeführt werden. Im Ergebnis dessen soll also jeder Messkanal $N = 2^n - 1$ Spannungssamples pro Zeitintervall $T_{R4}$ liefern.

Zur Erfassung aller Datensamples einer Periode wird in den Kanälen ❶ und ❷ nur eine Zeit von $T_{R1} = T_{R2} = (2^n - 1) \cdot 2^n \cdot f_c^{-1}$ benötigt. Man kann deren Messung also $2^{2n}$-fach innerhalb des Zeitintervalls $T_{R4}$ wiederholen und die erfassten Werte synchron mitteln. In Fig. 1 ist das durch $\Sigma^{22n}$ ... symbolisiert. Im Kanal ❸ benötigt die Erfassung aller Werte eine Zeit von $T_{R3} = (2^n - 1) \cdot 2^{2n} \cdot f_c^{-1}$. Hier kann man die Messungen $2^n$-mal wiederholen und synchron mitteln. Gleichzeitig wird um den Faktor $2^n$ höher als nach dem Nyquist-Theorem nötig abgetastet, so dass durch ein Down-Sampling um den Faktor $2^n$ schließlich die resultierende Anzahl $N = 2^n - 1$ von Spannungswerten zur Verfügung steht. Die Reihenfolge von Mitteln oder Down-Sampeln ist dabei unerheblich. Im letzten Kanal ❹ muss dann nur noch die um den Faktor $2^{2n}$ zu hohe Abtastung durch ein entsprechendes Down-Sampling kompensiert werden.

Auf diese Weise werden in jedem Messkanal des Hyper-Breitband-Systems innerhalb der Zeitspanne $T_{R4}$ die gleiche Anzahl von Datenpunkten zur Verfügung gestellt. Die Zeit $T_{R4}$, also die Zeit einer vollständigen Messung, wird durch die kleinste zu messende Frequenz festgelegt $T_{R4} = T_{P4} = f_{4min}^{-1}$. Die so entstandenen Teilmesssignale werden anschließend parallel durch eine Fourier-Transformation in vier komplexwertige Spektren umgerechnet und schließlich zu einem quasi-logarithmisch skaliertem Spektrum vereinigt. Jeder der einzelnen Datenpunkte resultiert aus $2^{2n}$ Messwerten, die vom ADC eingesammelt wurden und durch synchrones Mitteln oder/und Down-Sampling auf jeweils einen Wert reduziert wurden. Somit hat jeder der Datenpunkte ein um den Faktor

$$Q = \sqrt{2^{2n}} = 2^n; \qquad Q[dB] = 10 lg 2^n \approx 10n + 3 \qquad (18)$$

geringeres Rauschen als ein einzelner mit dem ADC erfasster Messwert.

Fig. 2 zeigt ein Blockschaltbild einer zweiten Ausführungsform eines Hyper-Breitband-Messsystems mit kaskadierten Pseudo-Rausch-Einheiten, welches sich ebenfalls zur Ausführung des erfindungsgemäßen Verfahrens eignet. Bei dieser Ausführungsform ist die Taktrate der ADC 16 im Vergleich zur in Fig. 1 gezeigten Ausführungsform reduziert. Es können daher noch einfachere ADCs verwendet werden. Hier arbeiten die beiden Messkanäle ❶ und ❷ in der Betriebsart sequenzielles Sampling. Beide Kanäle sind mit geeigneten Track-and-Hold (T&H) Schaltungen 18 ausgestattet, um der analogen Bandbreite in beiden Messkanälen Rechnung zu tragen. Die geringere Taktrate des ADC 16 ermöglicht aber nur noch kleinere Mittelungs- und Down-Sampling-Faktoren, so dass sich die Rauschunterdrückung verschlechtert. In abgewandelten Ausführungsformen kann das analoge Tiefpassfilter im Kanal ❹ entfallen, da es durch das Down-Sampling in der Recheneinheit 17 mit erledigt wird.

Fig. 3 zeigt schließlich eine Ausführungsform des Messsystems mit zwei separat getakteten Zwei-Kanal-ADC 16.

Alle in den Fig. 1-3 gezeigten Ausführungsformen gehen vereinfacht davon aus, dass sich die Frequenzbänder in den einzelnen Sub-Bändern der Messkanäle nahtlos aneinanderreihen. Das setzt voraus, dass die Tiefpassfilter 14 zur Bandbegrenzung eine ideale Rechteckform aufweisen, was eine praktisch nicht realisierbare Annahme darstellt. Aufgrund der endlichen Flankensteilheit realer Tiefpassfilter wird es also zu einer kleinen Frequenzlücke zwischen aufeinanderfolgenden Kanälen kommen. Da die Relaxationseffekte der Testobjekte sehr breitbandig sind, kann man solche Frequenzlücken akzeptieren. Sollte dies für spezielle Anforderungen nicht hinnehmbar sein, kann durch die Wahl der LFSR-Ordnung von *n* + **1** und der Teiler-Ordnung von *n* eine Frequenzüberlappung zwischen den Sub-Bändern erreicht werden, innerhalb derer das Tiefpassfilter in seinen Sperrbereich übergehen kann.

Die aufgeführten Zahlen für die Ordnung von LFSR und Teiler sowie synchrone Mittelung und Down-Sampling sind nur als Beispiele zu werten. Es gibt einen weiten Spielraum diese Zahlen den Gegebenheiten anzupassen, insbesondere auch dann, wenn die Messdaten der einzelnen Subsysteme nach synchroner Mittelung und Down-Sampling nicht gleichzeitig vorliegen müssen.

Die in den Figuren 1-3 gezeigten Ausführungsformen dienen insbesondere der Verdeutlichung des Signalflusses und beziehen sich nicht auf eine bestimmte technische Implementierung. Diese kann durch direkte Verschaltung elektronischer Baugruppen (LFSR, Teiler etc.) in Hardware geschehen. Es gibt aber auch die Möglichkeit, die Strukturen und Signale in Software abzubilden und z. B. von einem FPGA ausführen zu lassen. Kombinationen aus beiden Implementierungskonzepten sind ebenso denkbar, wobei jedoch jene Systemkomponenten, die bei sehr hohen Frequenzen arbeiten, vorzugsweise in Hardware aufgebaut sind. Bei Softwareimplementierungen ist darauf zu achten, dass die erzeugten M-Sequenzen als analoge Signale anzusehen sind, auch wenn diese mit digitalen Mitteln erzeugt wurden. Das bedeutet, dass zufällige Störungen auf den Signalen, wie sie z. B. durch Überkoppeln mit anderen Digitalsignalen innerhalb eines FPGAs auftreten, zu vermeiden sind bzw. nachträglich eliminiert werden müssen.

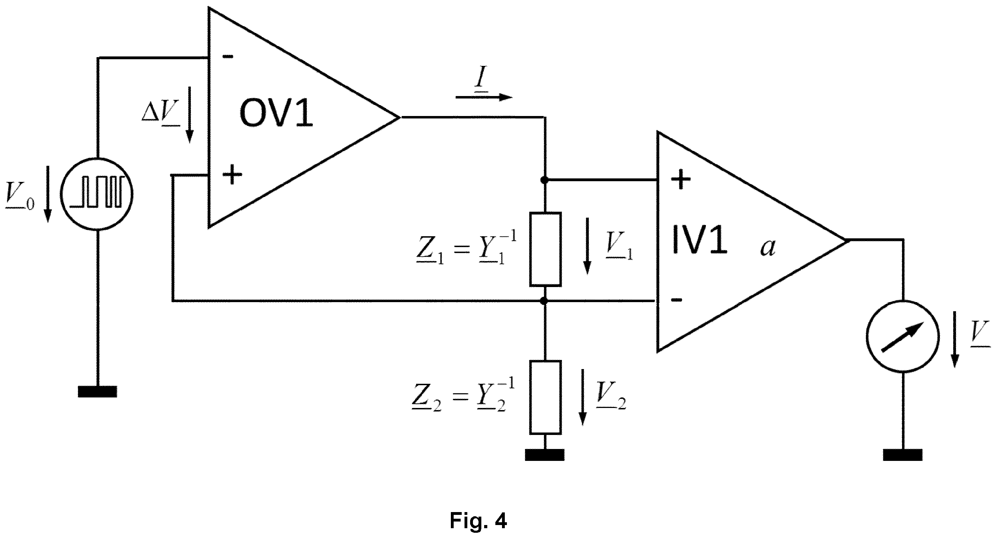

Fig. 4 zeigt ein Schaltbild einer einfachen Ausführungsform einer Messschaltung zur Impedanz-/Admittanzmessung, wobei hier eine Stromeinspeisung und Spannungsmessung erfolgt. Dazu werden ein Operationsverstärker OV1 sowie ein an dessen Ausgang geschalteter Instrumentenverstärker IV1 genutzt. Am negierenden Eingang des Operationsverstärkers wird eine Generatorspannung $\underline{V_0}$ eingespeist. Aufgrund der großen Eingangswiderstände des Operations- und Instrumentenverstärkers bleibt der Stromfluss auf die beiden in Serie geschalteten Impedanzen $\underline{Z_1}$ und $\underline{Z_2}$ begrenzt. Der Operationsverstärker OV1 erzwingt dabei einen solchen Stromfluss, dass $\underline{V_2} = \underline{Z_2} \cdot \underline{I} = \underline{V_0}$ ist. Damit ergibt sich die vom Instrumentenverstärker IV1 abgegriffene Spannung zu:

$$\underline{V} = a \cdot \underline{Z_1} \cdot \underline{I} = a \frac{\underline{Z_1}}{\underline{Z_2}} \underline{V_0} \qquad\qquad (19)$$

*a* ist hierbei die Verstärkung des Instrumentenverstärkers, $\underline{Z_1}$ stellt die zu messende Impedanz dar und $\underline{Z_2}$ ist die Referenzimpedanz. In Beziehung zu Formel (7) stellt dabei $\underline{L} = a \frac{\underline{Z_1}}{\underline{Z_2}}$ das Pfadgewicht dar. Wie bereits angedeutet, lassen sich diese Messgleichungen im Allgemeinen durch Möbius-Transformationen ausdrücken. Eine solche Transformation ist in ihrer allgemeinen Form in Formel (20) dargestellt:

$$y = \frac{\alpha + \beta \cdot x}{\gamma + \delta \cdot x}; \quad \alpha \cdot \delta - \beta \cdot \gamma \neq 0 \qquad\qquad (20)$$

Für das Beispiel nach Formel (19) bedeutet das: *x* = $\underline{Z_1}$; $\alpha$ = **0**; $\beta = \underline{Z_2}^{-1}$ ; $\gamma$ = **0** und $\delta$ = **1.**

Alternativ kann aber auch $\underline{Z_2}$ als die zu messende Impedanz definiert werden. Dann erzwingt der Operationsverstärker eine bestimmte Spannung über der unbekannten Impedanz (die Messschaltung arbeitet mit Spannungseinspeisung) und der Spannungsabfall über $\underline{Z_1}$ dient zur Ermittlung des Stromflusses. In diesem Fall ist es zweckmäßiger die Gleichung (19) durch Admittanzen wie folgt auszudrücken:

$$\underline{V} = \frac{\underline{Y_2}}{a \cdot \underline{Y_1}} \underline{V_0}, \ \text{da} \ \underline{I} = \underline{Y_2} \cdot \underline{V_2} = \underline{Y_2} \cdot \underline{V_0} = \underline{Y_1} \cdot a \cdot \underline{V} \qquad\qquad (21)$$

Selbstverständlich sind zahlreiche abgewandelte Messschaltungen denkbar, um die Impedanz an einem Testobjekt zu bestimmen. Als Messgröße tritt dabei immer eine Spannung auf, die über eine Referenzadmittanz in Relation zur Admittanz des Testobjektes steht. Falls die Messungen an Substanzen gleicher Art durchgeführt werden, kann das Verhalten der Referenzadmittanz an das Verhalten einer "typischen Testsubstanz" angepasst werden. Das führt dazu, dass die Messungen besonders sensitiv auf Änderungen der Testsubstanzen reagieren können. Als Referenzadmittanz können passive elektronische Netzwerke dienen oder eine zweite Messsonde, die in Kontakt mit einem typischen Referenzmaterial steht. Die beispielhaft gezeigte Messschaltung ist unter Nutzung von M-Sequenzen einsetzbar.

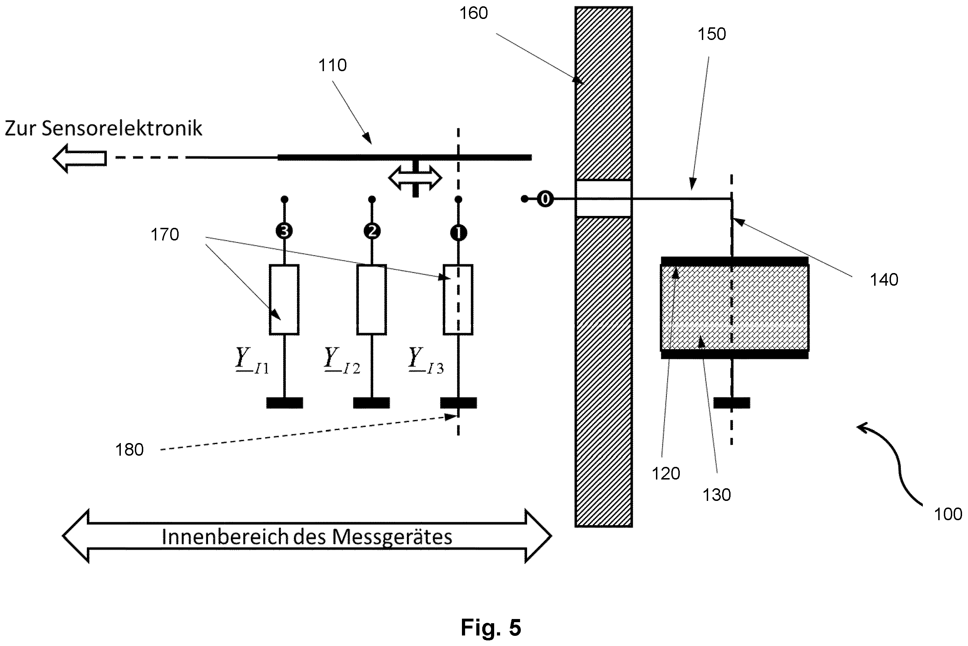

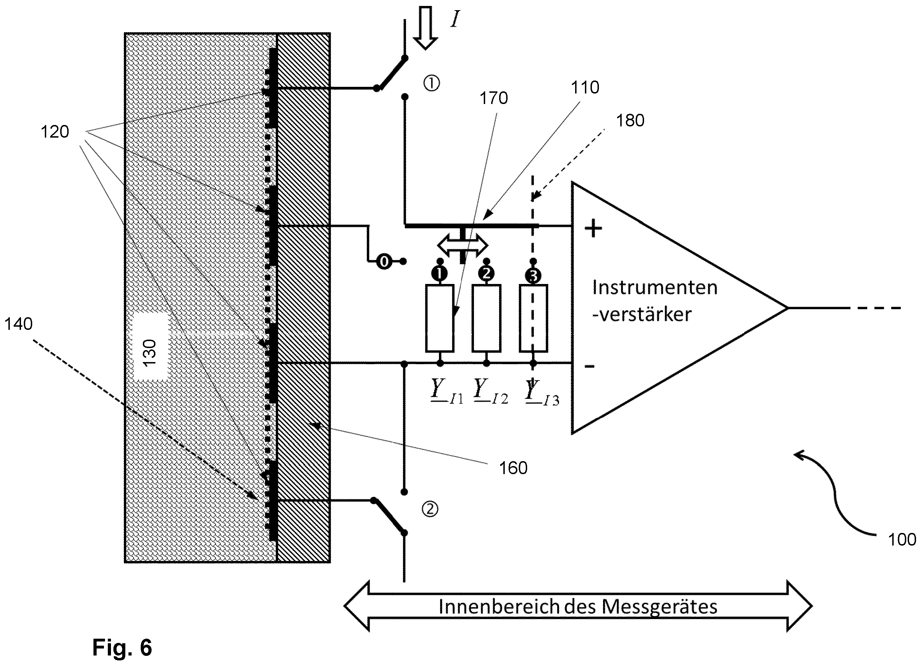

Eine einkanalige Spannungserfassung erfordert Referenzmessungen. Fig. 5 und Fig. 6 zeigen schematisch Anordnungen zum Erfassen dieser Referenzmessungen eines Messgerätes 100, welches im Messbetrieb mit einer Zwei-Elektroden-Anordnung (Fig. 5) bzw. einer Vier-Elektroden-Anordnung (Fig. 6) arbeitet. Das Messgerät 100 bildet mit seinen Komponenten somit einen Bestandteil des zuvor beschriebenen Messsystems, welches seinerseits auch die Messumgebungen erfasst. Im normalen Messbetrieb befindet sich ein Messstellenumschalter 110 in der Position ⓿, sodass eine außerhalb des Messgeräts befindliche Elektrodenanordnung 120 an die Sensorelektronik des Messgeräts angeschaltet ist und damit die gewünschten Messsignale erfasst werden. Die Elektrodenanordnung 120 befindet sich im Messbetrieb an einem Testobjekt 130, welches insbesondere durch eine flüssige oder feste Testsubstanz gebildet ist. Das Testobjekt 130 definiert damit eine Messebene, die im Falle der Werkskalibrierung mit einer externen Kalibrierebene 140 übereinstimmt. Über eine Signalzuführung 150 ist die Elektrodenanordnung 120 an die Position ⓿ des Messstellenumschalters 110 angeschlossen. Die Trennung zwischen dem Geräteinneren und der Umgebung, in welcher sich das Testobjekt 130 befindet, ist durch ein Gerätegehäuse 160 definiert, welches bevorzugt elektrisch leitfähig ist und auf Massepotenzial liegt (Fig. 5), alternativ aber auch elektrisch isolierend ausgeführt sein kann (Fig. 6).

Um eine Neubestimmung der Parameter der Möbius-Transformation (kurz Möbius-Parameter) beim Anwender durchzuführen, werden von Zeit zu Zeit vom Messstellenumschalter 110 die Positionen ❶, ❷ und ❸ eigenommen, um eines von drei internen Referenznetzwerken 170 (auch Referenzelemente genannt) (im einfachsten Fall ein Widerstand oder Kondensator) anstelle der Elektrodenanordnung an die Sensorelektronik anzuschalten. Das jeweilige interne Referenzelement 170, welches an die Sensorelektronik angeschlossen ist, bildet dann eine interne Bezugs- oder Referenzebene 180. Aus diesen Messdaten werden nach Formel (16) die Möbius-Parameter bestimmt. Nach dem Rückschalten auf Position ⓿ werden dann mit Hilfe der ermittelten Möbius-Parameter die von der Elektrodenanordnung gelieferten Messsignale korrigiert und auf den gewünschten Messwert umgerechnet.

Das Schaltschema nach Fig. 6 für eine Vier-Elektroden-Anordnung enthält zusätzlich noch die Schalter ① und ②. Diese dienen der Umschaltung des Strompfades vom Mess- auf den Referenzierungsmodus.

Mit der zuvor beschriebenen Methode lassen sich in beliebigen Zeitabständen automatisch Sensor-Neu-Referenzierungen ausführen. Allerdings würden ohne weitere Maßnahmen auch einige Mängel fortbestehen, wie sie generell von anderen Messgeräten bekannt sind, die mit internen Referenzelementen ausgerüstet sind. Zu diesen Nachteilen zählt, dass Referenz- und Messebene nicht mehr identisch sind, jedes Messgerät einen Satz präziser Referenznormale benötigt und der Messstellenumschalter sich zusätzlich im Referenz- als auch im Messpfad (und somit auch im Pfad der externen Werkskalibrierung) befindet und damit bei der Neu-Referenzierung der Möbius-Parameter nicht erfasste Fehler einbringt.

Um diese Mängel zu beseitigen, wird eine (mindestens einmalige) externe Anfangs- bzw. Werkskalibrierung ausgeführt. Diese wird regelmäßig nicht am Einsatzort des Sensors durchgeführt, da hierzu ein Zugang zu den Sensorelektroden nötig wäre. Die spätere Nutzung der aus der Werkskalibrierung gewonnenen Werte setzt im Messgerät langzeitstabile (in-situ) interne Referenzelemente voraus. Das bedeutet, dass die für die Bestimmung der Möbius-Parameter wichtigen Schaltungsteile des Messgerätes gegen Temperaturschwankungen, Verschmutzung und Feuchte zu schützen sind. Eine präzise Kenntnis der Bauelemente-Parameter des Referenznetzwerkes (Referenzelemente) bzw. der diese bildenden internen Schaltungselemente ist aber nicht erforderlich, so dass keine Notwendigkeit besteht, eng tolerierte und damit teure passive Komponenten einzusetzen.

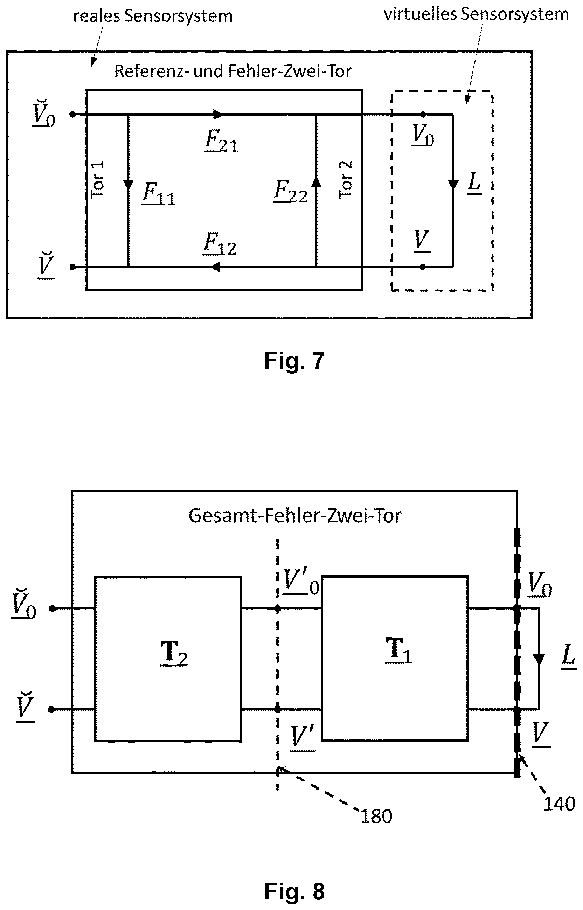

Der Ablauf der mindestens einmaligen Werkskalibrierung (externe Kalibrierung) des Messgerätes wird nachfolgend detailliert dargestellt. Wie oben bereits erläutert, lassen sich alle gerätespezifischen Abweichungen von einem idealen Verhalten durch ein einzelnes Referenz- und Fehler-Zwei-Tor abbilden, wie es in Fig. 7 schematisch dargestellt ist. Diese Abweichungen können mathematisch durch einen Signalflussgraph symbolisiert oder durch eine Matrix nach Formel (9) beschrieben werden. Eine andere Matrix-Darstellung ist oben mit Formel (10) gegeben, die zum gleichen Ergebnis führt. Ein Vorteil dieser Matrix-Darstellung ist, dass man eine Verkettung mehrerer Fehler-Zwei-Tore mathematisch leicht ausdrücken kann, was durch die Erfindung genutzt wird. Letztlich werden die Werte der Elemente beider Matrizen durch die drei Möbius-Parameter *A, B und C* bestimmt, wie sie unter Formel (12) eingeführt wurden.

Wie aus Fig. 5 und 6 ersichtlich ist, besteht im Fall einer Neu-Referenzierung eine Trennung von Referenz- und Messebene. Dies lässt sich mathematisch beschreiben, indem das ursprüngliche Fehler-Zwei-Tor in zwei Teile getrennt wird, die jeweils durch die Fehler-Matrizen $\underline{T}_1$ und $\underline{T}_2$ beschrieben werden. Fig. 8 zeigt diese Zerlegung schematisch. Die Fehlermatrix $\underline{T}_2$ beinhaltet dabei alle Gerätefehler, die links von der internen Referenzebene 180 auftauchen, und $\underline{T}_1$

umfasst alle Abweichungen vom idealen Verhalten, die zwischen der internen Referenzebene 180 und der externen Kalibrierebene 140 (identische mit der Messebene) zu verzeichnen sind.

Im Falle eines Messvorganges (Messstellenumschalter 110 in Position **❶**) ist jene Messebene relevant, die sich direkt an den Sensorelektroden befindet. Das bedeutet, dass die Messfehler der gesamten Übertragungskette in den Messwert eingehen. Diese Messfehler werden vollständig durch die Fehler-Matrix **T** erfasst:

$$\underline{\mathbf{T}} = \underline{\mathbf{T}}_2 \cdot \underline{\mathbf{T}}_1 \qquad\qquad (22)$$

Die Werte der Fehler-Matrix **T** können auf die oben bereits beschriebene Weise ermittelt werden, indem drei externe Kalibrierelemente direkt mit der Messebene in Kontakt gebracht werden. Dieser Vorgang stellt den ersten Schritt einer externen Kalibrierung (Werkskalibrierung) dar. Als externe Kalibrierelemente können dabei Stoffe mit bekannter Permittivität oder Leitfähigkeit sowie Eintor-Netzwerke mit bekannter Impedanz, Admittanz oder bekanntem Reflektionsfaktor Anwendung finden.

Im zweiten Schritt der Werkskalibrierung werden die internen Referenzelemente 170 zunächst als Messobjekte angesehen. Das bedeutet, dass der Messstellenumschalter 110 nacheinander in die Stellungen **❶**, **❷** und **❸** gebracht wird (Fig. 5 und 6). Die dazugehörigen Messdaten werden erfasst und anschließend mit den soeben ermittelten Fehler-Termen (entsprechend der Matrix $\underline{\mathbf{T}}$) korrigiert. Die Messdaten der internen Referenzelemente 170 unterliegen nur den Fehlern, die die Fehler-Matrix $\underline{\mathbf{T}}_2$ repräsentiert, ihre Korrektur erfolgt aber über die gesamte Fehlerkette $\underline{\mathbf{T}} = \underline{\mathbf{T}}_2 \cdot \underline{\mathbf{T}}_1$. Das hat zur Folge, dass nicht die tatsächlichen Werte der Kalibrierelemente (repräsentiert durch ihre Pfadwerte $\underline{L}_{I,j}$)**,** sondern die auf die externe Kalibrierebene 140 projizierten Werte $\underline{L'}_{I,j}$ bestimmt werden und im Weiteren als Referenz für die interne Referenzierungsmessungen dienen.

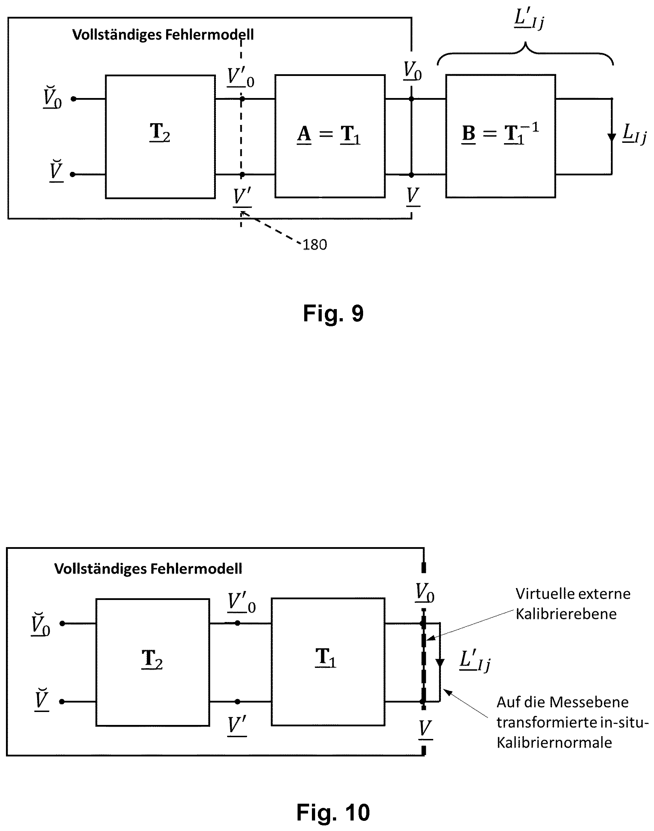

Diese Projektion ist in Fig. 9 schematisch dargestellt, wobei lediglich virtuell zwei zusätzliche Zwei-Tor-Systeme eingefügt sind, deren Produkt eine Einheitsmatrix ergeben ($\underline{\mathbf{A}} \cdot \underline{\mathbf{B}} = \mathbf{I}$ bzw. $\underline{\mathbf{A}} = \underline{\mathbf{B}}^{-1}$). Damit haben sie keinen Einfluss auf das Gesamtverhalten des Modells.

Prinzipiell kann die Matrix $\underline{\mathbf{A}}$ beliebig gewählt werden, solange sie nicht singulär ist. Man kann sie also auch zu $\underline{\mathbf{A}} = \underline{\mathbf{T}}_1$ wählen, selbst wenn die Werte von $\underline{\mathbf{T}}_1$ nicht bekannt sind. Die virtuell eingefügten Sub-Fehlersysteme kann man nun einerseits dem Fehler-System $\underline{\mathbf{T}}_2$ zuschlagen und bekommt damit das vollständige Fehlersystem $\underline{\mathbf{T}} = \underline{\mathbf{T}}_2 \cdot \underline{\mathbf{T}}_1$. Andererseits kann die Matrix $\underline{\mathbf{B}} = \underline{\mathbf{T}}_1^{-1}$ dem Pfadgewicht $\underline{L}_{I,j}$ der internen Referenznetzwerke zugeschlagen werden, die nun den Wert $\underline{L'}_{I,j}$ haben, welcher im zweiten Schritt der Kalibrierroutine bestimmt wurde. Diese (virtuelle) Umgruppierung führt zu einer schematischen Darstellung gemäß Fig. 10, welche identisch ist mit der ursprünglichen Fehlerkonfiguration gemäß Fig. 7. Durch die beiden Schritte der Werkskalibrierung erreicht man also eine Referenzierung der Spanungsmessung an der Messebene, ohne dass ein tatsächlicher Zugang dazu nötig ist. Zwar ist damit nur ein gemeinsames Verhalten der Fehlermatrix $\underline{\mathbf{T}}_1$ und der Pfadgewichte $\underline{L}_{I,j}$ der internen Referenznetzwerke (Referenzelemente) in Form von $\underline{L'}_{I,j}$ bekannt, was aber für die Fehlerkorrektur der Messwerte von realen Testobjekten ausreichend ist.

Alle oben aufgeführten Kalibrier- und Referenzierungsschritte führen letztlich zu einer Verkettung mehrere Möbius-Transformationen, deren Resultat wieder eine Möbius-transformation ist (aber mit anderen Parameter $\alpha$, $\beta$, $\gamma$, $\delta$). Das hat zur Konsequenz, dass ohne das Modifikationen im Messablauf oder der Datenverarbeitung vorgenommen werden, das Ergebnis einer Messung immer in jener physikalischen Größe vorliegt, mit der auch die Werkskalibrierung durchgeführt wurde. Wenn also zur Werkskalibrierung mindestens drei Stoffe (externe Kalibrierelemente) mit bekannter Permittivität verwendet wurden, ist das Messergebnis ein Permittivitätsspektrum. Werden dagegen drei Ein-Tor-Netzwerke mit bekannter Impedanz verwendet, ergibt sich ein Impedanzspektrum usw. Für elektrische große Sensoren existiert diese Übertragbarkeit nur bei der Impedanz, der Admittanz und dem Reflektionsfaktor. Permittivität oder Leitfähigkeit sind dann davon ausgeschlossen.

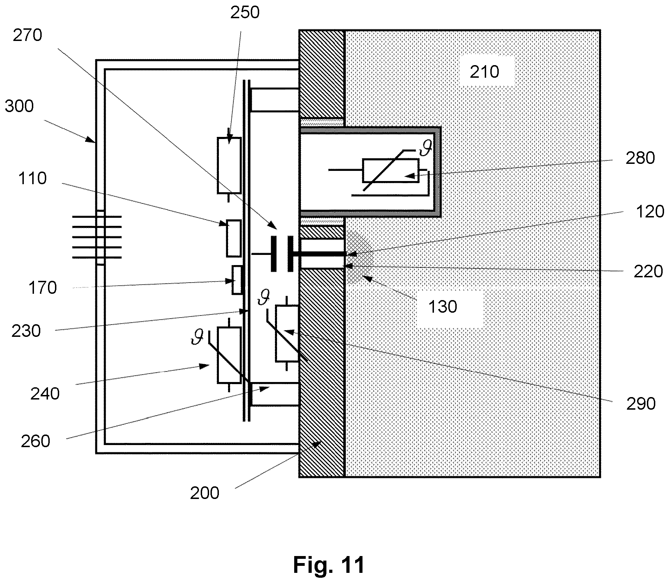

Fig. 11 zeigt eine Ausführungsform zur technischen Implementierung der Verfahrensabschnitte der Spannungsreferenzierung und der Kalibrierung in einem Messgerät zur Messung der Permittivität (oder Admittanz) einer Flüssigkeit als Testobjekt. Zur Erzeugung eines Testsignals und zur Erfassung der Messsignale dient ein mehrstufiges M-Sequenz-Konzept, wie es oben beschrieben wurde. Als Messelektrode ist beispielhaft eine Zwei-Elektroden-Anordnung in Form einer Ringelektrode gewählt, die beispielsweise in einer Messschaltung gemäß Fig. 4 betrieben wird. Für jede Stufe der M-Sequenz-Einheit wird eine Messschaltung inklusive Sensorelektroden benötigt. Die Art der Messschaltung kann dabei in jeder Stufe eine andere sein.

Die Ausführungsform gemäß Fig. 11 besitzt eine Messkammer 200 mit einer Testflüssigkeit 210. In einer Wandung der Messkammer 200 befindet sich eine isolierende Durchführung 220 mit einer oder mehreren Messelektroden 120, die mit der Testflüssigkeit 210 in Kontakt stehen. Das dort resultierende Messvolumen, stellt das Testobjekt 130 dar und ist mit einer Doppelschraffur markiert. Auf der anderen Seite der Wandung befinden sich in unmittelbarer Nähe die internen Referenzelemente 170, einschließlich des Messstellenumschalters 110. Diese sind auf einer Leiterplatte 230 montiert, die thermisch isoliert befestigt ist. Um die Parameter der an den internen Referenzelementen 170 (in-situ-Normale) beteiligten Bauelemente langzeitstabil zu halten, wird die Leiterplatte 230 bevorzugt auf einer konstanten Temperatur gehalten. Dazu wird die Temperatur mittels eines ersten Temperatursensors 240 erfasst und durch eine Regelschaltung in Verbindung mit einem Heiz- oder Peltierelement 250 auf Solltemperatur gehalten. Um den Wärmeabfluss zu verringern, ist die Leiterplatte 230 vorzugsweise thermisch isoliert, einerseits durch thermisch isolierende Abstandshalter 260 und andererseits durch thermisch isolierende Bauelemente in den Signalpfaden. Für hochfrequente Signale können dafür keramische Kondensatoren 270 eingesetzt werden. Für Gleichspannung und niederfrequente Wechselspannung sind dünne, lange Drähte anwendbar.

Da die Permittivität einer Flüssigkeit stark temperaturabhängig ist, sollte die Temperatur des Messvolumens der Flüssigkeit erfasst werden. Dazu dienen zweite und dritte Temperaturfühler 280, 290, die die Volumentemperatur der Flüssigkeit und die Temperatur der Messkammerwandung erfassen. Um die Referenzeinheit vor weiteren Umwelteinflüssen zu schützen, ist die gesamte Anordnung mit einer Schutzhülle 300 hermetisch gekapselt. Dazu werden Mess- und Steuersignale (Anregungssignal, Messsignal, Schaltersteuerung, Temperatursensoren, Heizelement/Peltierelement) ebenfalls mit geringer thermischer Kopplung nach außen geführt.

Zur Durchführung der Werkskalibrierung werden geeignete externe Kalibrierelemente benötigt. Dafür können entweder Flüssigkeiten mit bekannter Permittivität verwendet werden oder elektrisch passive Netzwerke mit bekannter Admittanz/ Impedanz/Reflektionsfaktor. Diese Netzwerke können sich auf Leitungsträgern befinden, die mit den Sensorelektroden kontaktiert werden. Vorzugsweise werden drei verschiedene externe Kalibrierelemente bei der Werkskalibrierung verwendet.

Somit ergeben sich bei Anwendung der Kalibrierung eine Reihe von Vorteilen. Eine auf die Messebene bezogene Kalibrierung lässt sich auf diese Weise mit Hilfe der in-situ-Referenznetzwerke erzielen. Die transformierten Werte $\underline{L'}_{I,j}$ der Kalibriernormale werden durch die Werkskalibrierung bestimmt und individuell für jeden Sensor abgespeichert. Sie gelten fortan als Referenzwerte der Referenznetzwerke bei praktischen Messungen an den Testsubstanzen. Die exakten Werte der internen Referenzelemente müssen vor der Werkskalibrierung nicht bekannt sein. Es sind also keine eng tolerierten Bauelemente dazu nötig. Die Fehlermatrix $\underline{T}_1$ ist Bestandteil der Referenzwerte $\underline{L'}_{I,j}$. Schaltungskomponenten zwischen interner Referenz- und externer Kalibrierebene haben Einfluss auf die Werte dieser Fehlermatrix. Durch die in-situ-Referenzierung mithilfe der internen Referenznetzwerke kann zwar nur die Fehler-Matrix $\underline{T}_2$ aktualisiert werden. Außer der Nicht-Idealität im unmittelbaren Umfeld der Sensorelektroden, umfasst diese aber alle Fehlerquellen des restlichen Messgerätes. Diese unterliegen typischerweise Umwelteinflüssen und Alterung. Eine ständige Aktualisierung der Messfehler ist daher durch die interne Referenzierung und ohne erneute Werkskalibrierung möglich. Durch den Referenzierungsvorgang, wird abgesehen von zufälligen Fehlern (z. B. Rauschen), die Messgenauigkeit des Sensors durch die Genauigkeit der internen Referenzelemente bestimmt. Da durch die Werkskalibrierung die internen Referenzelemente jedes Sensors individuell mit einem einheitlichen Satz von externen Kalibrierelementen (Werksnormale) vermessen werden, ergibt sich damit auch für unterschiedliche Geräten eine gute Reproduzierbarkeit und Transferierbarkeit deren Messungen.

**Bezugsziffern**

11 - Taktgenerator
12 - Taktteiler
13 - Schieberegister
14 - Tiefpassfilter
15 - Messumgebung
16 - Analog/Digital-Wandler
17 - Recheneinheit
18 - Track and Hold Schaltung

100 - Messgerät
110 - Messstellenumschalter
120 - Elektrodenanordnung
130 - Testobjekt
140 - externe Kalibrierebene / Messebene
150 - Signalzuführung
160 - Gerätegehäuse
170 - interne Referenzelemente / Referenznetzwerke
180 - interne Referenzebene

200 -  Messkammer
210 -  Testflüssigkeit
220 -  Durchführung
230 -  Leiterplatte
240 -  erster Temperatursensor
250 -  Heiz- oder Peltierelement
260 -  Abstandshalter
270 -  keramischer Kondensator
280 -  zweiter Temperatursensor
290 -  dritter Temperatursensor
300 -  Schutzhülle

**Patentansprüche**

1. Verfahren zur Ausführung einer impedanzspektroskopischen Messung mit einem Messgerät (100), welches im Messbetrieb an Sensorelektroden eines Testobjekts (130) ein Messsignal abgreift, folgende Schritte umfassend:

   i. Erzeugung eines breitbandigen Testsignals, welches aus mehreren Testsignalanteilen in Form binärer Pseudo-Rausch-Folgen besteht, wobei eine vorbestimmte Bandbreite (b) des Testsignals in mindestens zwei benachbarte Sub-Bänder der Testsignalanteile aufgeteilt wird;
   ii. Anregen des Testobjekts durch gleichzeitiges Einprägen aller Testsignalanteile in ihren Sub-Bändern;
   iii. Erfassen der Reaktion des angeregten Testobjekts, wobei für jedes der Sub-Bänder jeweils mindestens ein zugeordneter Sensor am Testobjekt Teilmesssignale im jeweiligen Sub-Band erfasst;
   iv. paralleles Verarbeiten der Teilmesssignale in parallelen Messkanälen durch Fourier-Transformation;
   v. Zusammensetzen der verarbeiteten Teilmesssignale zu einem Messsignal, welches das Testobjekt charakterisiert.

2. Verfahren nach Anspruch 1, **dadurch gekennzeichnet, dass** zumindest vor der ersten Ausführung der Schritte zur impedanzspektroskopischen Messung ein Verfahrensabschnitt zur externen Kalibrierung des Messgerätes ausgeführt wird, wobei dieser Verfahrensabschnitt folgende Schritte umfasst:

   a) aufeinanderfolgendes Anschalten von mindestens drei externen Kalibrierelementen, die eine externe Messebene (140) bilden, an den Messeingang des Messgerätes anstelle des im Messbetrieb dort befindlichen Testobjekts (130);
   b) Durchführen jeweils einer externen Kalibriermessung an jedem der externen Kalibrierelemente (140) zur Bestimmung einer Fehler-Matrix T;
   c) aufeinanderfolgendes Anschalten von mindestens drei internen Referenzelementen (170), die im Messgerät integriert sind, an eine interne Referenzebene (180) des Messgerätes anstelle der im Messbetrieb dort anzuschließenden Sensorelektrode;
   d) Durchführen jeweils einer internen Referenzmessung an jedem der internen Referenzelemente (170) und Bestimmung deren elektrischen Parameter in Bezug auf die externen Kalibrierelemente mittels der Fehler-Matrix T sowie Speicherung der korrigierten internen Referenzwerte.

3. Verfahren nach Anspruch 2, **dadurch gekennzeichnet, dass** vor der Ausführung der Schritte zur impedanzspektroskopischen Messung ein Verfahrensabschnitt zur internen Referenzmessung des Messgeräts ausgeführt wird, folgende Schritte umfassend:

   - aufeinanderfolgendes Anschalten der mindestens drei internen Referenzelemente an die interne Referenzebene (180) des Messgerätes anstelle der im Messbetrieb dort anzuschließenden Sensorelektrode;
   - Durchführen jeweils einer Messung an jedem der internen Referenzelemente;
   - Vergleich der an den internen Referenzelementen gewonnenen Messwerte mit den gespeicherten Werten und Anpassung der Fehler-Matrix T.

4. Verfahren nach einem der Ansprüche 2 bis 3, **dadurch gekennzeichnet, dass** beim Durchführen der externen Kalibrierung und/oder internen Referenzmessung jeweils nur eine Messgröße, insbesondere eine elektrische Spannung an den Kalibrier- bzw. Referenzelementen bestimmt wird.

5. Verfahren nach einem der Ansprüche 1 bis 4, **dadurch gekennzeichnet, dass** als Testsignalanteil jeweils eine M-Sequenz erzeugt wird.

6. Verfahren nach Anspruch 5, **dadurch gekennzeichnet, dass** die M-Sequenz mithilfe eines digitalen, linear rückgekoppelten Schieberegister (LFSR) erzeugt wird, welches von einem Taktgenerator ein Taktsignal ($f_c$) oder einen daraus abgeleiteten Taktsignalanteil erhält.

7. Verfahren nach einem der Ansprüche 1 bis 6, **dadurch gekennzeichnet, dass** zum Erfassen des Teilmesssignals eine der folgenden Methoden genutzt wird:

   - Nyquist Sampling,
   - Interleaved Sampling,
   - Überabtastung, vorzugsweise mit digitaler Tiefpassfilterung.

8. Verfahren nach einem der Ansprüche 1 bis 7, **dadurch gekennzeichnet, dass** die Erzeugung der Testsignalanteile und die Verarbeitung der Teilmesssignale unter Nutzung einer gemeinsamen Taktquelle erfolgen, insbesondere unter Verwendung unterschiedlich gestufter Taktteiler (120), um M-Sequenzen über ein breit gefächertes Frequenzintervall der Sub-Bänder zu erzeugen.

9. Verfahren nach einem der Ansprüche 1 bis 8, **dadurch gekennzeichnet, dass** sich die Frequenzen der Testsignalanteile an den Grenzen der benachbarten Sub-Bänder teilweise überdecken.

10. Verfahren nach einem der Ansprüche 1 bis 9, **dadurch gekennzeichnet, dass** die vorbestimmte Bandbreite (b) des Testsignals in mindestens K Sub-Bänder der Testsignalanteile aufgeteilt wird, vorzugsweise mit K $\geq$4.

11. Verfahren nach einem der Ansprüche 1 bis 10, **dadurch gekennzeichnet, dass** das Erfassen der Reaktion des angeregten Testobjekts in Schritt iii. durch Ausführen genau einer Spannungsmessung erfolgt.

12. Messsystem zur Ausführung einer impedanzspektroskopischen Messung an einem Testobjekt (130), umfassend:

   - einen Taktgenerator (11) zur Erzeugung eines Taktsignals ($f_c$);
   - einen Taktteiler (12), um das Taktsignal in mindestens zwei Taktsignalanteile zu unterteilen;
   - mindestens zwei parallel arbeitenden Messkanäle, die jeweils mit einem Taktsignalanteil synchronisiert werden, wobei jeder Messkanal umfasst:

      o ein linear rückgekoppeltes Schieberegister (13) (LFSR), welches in einem Sub-Band ein Teiltestsignal in Form einer binären Pseudo-Rausch-Folge erzeugt,
      o eine Messumgebung (15) mit einem Sensor, der im Sub-Band des Messkanals am Testobjekt (130) ein Teilmesssignal erfasst,
      o einen Analog/Digital-Wandler (16) (ADC), der das Teilmesssignal wandelt,
      o ein Filter zur Bandbegrenzung des jeweiligen Teilmesssignals;

   - eine Recheneinheit (17), welche die Teilmesssignale aus den Messkanälen empfängt und unter Anwendung einer parallelen Fourier-Transformation in ein Messsignal mit quasi-logarithmischer Frequenzachse zusammensetzt.

13. Messsystem nach Anspruch 12, **dadurch gekennzeichnet, dass** es für die Ausführung eines Verfahrens gemäß einem der Ansprüche 1 bis 11 konfiguriert ist.

14. Messsystem nach Anspruch 12, weiterhin umfassend:

   - ein Gerätegehäuse;
   - eine Sensorelektronik zur Verarbeitung des von den Sensorelektroden des Sensors gelieferten Teilmesssignals;
   - einen Messeingang, an welchen wahlweise das Testobjekt (130) oder ein externes Kalibrierelement anschaltbar ist;
   - mindestens drei unterschiedliche interne Referenzelemente, die innerhalb des Gerätegehäuses integriert sind;
   - einen mindestens vierpoligen Messstellenumschalter, der wahlweise den Messeingang oder eines der internen Referenzelemente an die Sensorelektronik anschaltet;

wobei die Recheneinheit (17) zum Durchführen eines Verfahrens gemäß einem der Ansprüche 2 bis 11 sowie zur Bestimmung und Speicherung einer Fehler-Matrix T sowie der Parameter der Referenzelemente konfiguriert ist.

15. Messsystem nach Anspruch 14, **dadurch gekennzeichnet, dass** es für einkanalige Spannungsmessungen konfiguriert ist.


**Claims**

1. A method for performing an impedance spectroscopy measurement with a measurement device (100) which in a measurement mode captures a measurement signal at sensor electrodes of a test object (130), which method includes the following steps:

   i. generating a broadband test signal consisting of plurality of test signal components in the form of binary pseudonoise sequences, wherein a predetermined bandwidth (b) of the test signal is subdivided into at least two neighbouring sub-bands of the test signal components;
   ii. exciting the test object by simultaneously impressing all test signal components in their sub-bands;
   iii. detecting the reaction of the excited test object, wherein for each of the sub-bands at least one associated sensor on the test object respectively detects partial measurement signals in the respective sub-band;
   iv. processing in parallel the partial measurement signals in parallel measurement channels by Fourier transform;
   v. combining the processed partial measurement signals into a measurement signal that characterises the test object.

2. A method according to claim 1, **characterised in that**, at least prior to the first performance of the steps for carrying out an impedance spectroscopy measurement, a method step for an external calibration of the measurement device is carried out, wherein this method step includes the following steps:

   a) successively connecting at least three external calibration elements that form an external measurement plane (140) to the measurement input of the measurement device instead of the test object (130) located there in a measurement mode;
   b) respectively performing an external calibration measurement on each of the external calibration elements (140) to determine an error matrix T;
   c) successively connecting at least three internal reference elements (170) integrated into the measurement device to an internal reference plane (180) of the measurement device instead of the sensor electrode that is to be connected there in a measurement mode;
   d) respectively performing an internal reference measurement on each of the internal reference elements (170) and determining their electrical parameters in relation to the external calibration elements by means of the error matrix T and storing the corrected internal reference values.

3. A method according to claim 2, **characterised in that**, prior to the performance of the steps for carrying out an impedance spectroscopy measurement, a method step for carrying out an internal reference measurement of the measurement device is carried out, which includes the following steps:

   - successively connecting the at least three internal reference elements to the internal reference plane (180) of the measurement device instead of the sensor electrode that is to be connected there in a measurement mode;
   - respectively performing a measurement on each of the internal reference elements;
   - comparing the measurement values obtained on the internal reference elements with the stored values and adjusting the error matrix T.

4. A method according to one of claims 2 to 3, **characterised in that**, during the performance of the external calibration and/or internal reference measurement, only one measurement variable, in particular an electrical voltage, is respectively determined on the calibration or reference elements.

5. A method according to one of claims 1 to 4, **characterised in that** an M-sequence is respectively generated as the test signal component.

6. A method according to claim 5, **characterised in that** the M-sequence is generated by means of a digital linear-feedback shift register (LFSR), which receives a clock signal ($f_c$) or a clock signal component derived form a clock signal from a clock generator 7.

7. A method according to one of claims 1 to 6, **characterised in that** one of the following methods is used to detect the partial measurement signal:

   - Nyquist sampling,
   - interleaved sampling,
   - oversampling, preferably with a digital low-pass filtering.

8. A method according to one of claims 1 to 7, **characterised in that** the generation of the test signal components and the processing of the partial measurement signals are performed using a common clock source, in particular using clock dividers (120) with different factors in order to generate M-sequences over a wide frequency range of the sub-bands.

9. A method according to one of claims 1 to 8, **characterised in that** the frequencies of the test signal components partially overlap at the boundaries between the neighbouring sub-bands.

10. A method according to one of claims 1 to 9, **characterised in that** the predetermined bandwidth (b) of the test signal is subdivided into at least K sub-bands of the test signal components, preferably with $K \geq 4$.

11. A method according to one of claims 1 to 10, **characterised in that** the detecting of the reaction of the excited test object in step iii. occurs by means of exactly one voltage measurement.

12. A measurement system for performing an impedance spectroscopy measurement on a test object (130), including:

   - a clock generator (11) for generating a clock signal ($f_c$);
   - a clock divider (12) for dividing the clock signal into at least two clock signal components;
   - at least two measurement channels which operate in parallel and which are respectively synchronised with a clock signal component, wherein each measurement channel includes:

     ◦ a linear-feedback shift register (13) (LFSR), which generates a partial test signal in the form of a binary pseudo-noise sequence in a sub-band,
     o a measurement environment (15) with a sensor which detects a partial measurement signal on the test object (130) in the sub-band of the measurement channel,
     o an analogue-to-digital converter (16) (ADC), which converts the partial measurement signal,
     ◦ a filter for band-limiting the respective partial measurement signal;

   - a computing unit (17), which receives the partial measurement signals from the measurement channels and, using a parallel Fourier transform, combines them into a measurement signal with a quasi-logarithmic frequency axis.

13. A measurement system according to claim 12, **characterised in that** it is configured to carry out a method according to one of claims 1 to 11.

14. A measurement system according to claim 12, further including:

   - a device housing;
   - sensor electronics for processing the partial measurement signal supplied by the sensor electrodes of the sensor;
   - a measurement input to which either the test object (130) or an external calibration element can be connected;
   - at least three different internal reference elements integrated within the device housing;
   - an at least four-pole measurement-point selector switch, which connects either the measurement input or one of the internal reference elements to the sensor electronics;

   wherein the computing unit (17) is configured to carry out a method according to one of claims 2 to 11 and to determine and store an error matrix T and the parameters of the reference elements.

15. A measurement system according to claim 14, **characterised in that** it is configured for single-channel voltage measurements.

**Revendications**

1. Procédé d'exécution d'une mesure par spectroscopie d'impédance à l'aide d'un dispositif de mesure (100) qui, pendant l'opération de mesure, prélève un signal de mesure au niveau des électrodes de capteurs d'un objet à tester (130), comprenant les étapes suivantes :

   i. la génération d'un signal de test à large bande, qui est composé de plusieurs composantes de signal de test sous forme de séquences de pseudo-bruit binaire, dans lequel une bande passante prédéterminée (b) du signal de test est divisée en au moins deux sous-bandes adjacentes des composantes de signal de test ;
   ii. l'excitation de l'objet à tester par inscription simultanée de toutes les composantes de signal de test dans leurs sous-bandes respectives ;
   iii. l'acquisition de la réaction de l'objet à tester excité, dans lequel, pour chacune des sous-bandes, au moins un capteur associé sur l'objet à tester enregistre des signaux de mesure partiels dans les sous-bandes respectives ;
   iv. le traitement parallèle des signaux de mesure partiels dans des canaux de mesure parallèles par transformée de Fourier ;
   v. la combinaison des signaux de mesure partiels traités en un signal de mesure, qui caractérise l'objet à tester.

2. Procédé selon la revendication 1, **caractérisé en ce que**, au moins avant la première exécution des étapes de mesure par spectroscopie d'impédance, une section de procédé pour l'étalonnage externe du dispositif de mesure est réalisée, dans lequel cette section de procédé comprend les étapes suivantes :

   a) la connexion successive d'au moins trois éléments d'étalonnage externes, qui forment un plan de mesure externe (140), à l'entrée de mesure du dispositif de mesure au lieu de l'objet à tester (130) qui y est placé pendant l'opération de mesure ;
   b) la réalisation d'une mesure d'étalonnage externe respective sur chacun des éléments d'étalonnage externes (140) afin de déterminer une matrice d'erreur T ;
   c) la connexion successive d'au moins trois éléments de référence internes (170), qui sont intégrés au dispositif de mesure, à un plan de référence interne (180) du dispositif de mesure au lieu de l'électrode de capteur qui y sera connectée pendant l'opération de mesure ;
   d) la réalisation d'une mesure de référence interne respective sur chacun des éléments de référence internes (170) et la détermination de leurs paramètres électriques par rapport aux éléments d'étalonnage externes au moyen de la matrice d'erreur T ainsi que la mémorisation des valeurs de référence internes corrigées.

3. Procédé selon la revendication 2, **caractérisé en ce que**, préalablement à l'exécution des étapes de mesure par spectroscopie d'impédance, une section de mesure de procédé pour la mesure de référence interne du dispositif de mesure est réalisée, comprenant les étapes suivantes :

   - la connexion successive d'au moins trois éléments de référence interne au plan de référence interne (180) du dispositif de mesure, au lieu de l'électrode de capteur qui y sera connectée pendant l'opération de mesure ;
   - la réalisation d'une mesure respective sur chacun des éléments de référence interne ;
   - la comparaison des valeurs de mesure obtenues sur les éléments de référence interne avec les valeurs mémorisées et l'ajustement de la matrice d'erreur T.

4. Procédé selon une des revendications 2 à 3, **caractérisé en ce que**, lors de l'exécution de l'étalonnage externe et/ou de la mesure de référence interne, respectivement une seule grandeur de mesure, notamment une tension électrique, est déterminée au niveau des éléments d'étalonnage ou de référence.

5. Procédé selon une des revendications 1 à 4, **caractérisé en ce qu'**une séquence M est générée comme composante de signal de test.

6. Procédé selon la revendication 5, **caractérisé en ce que** la séquence M est générée à l'aide d'un registre à décalage à rétroaction linéaire numérique (LFSR), qui reçoit un signal d'horloge ($f_c$) ou une composante de signal d'horloge dérivée de celui-ci, provenant d'un générateur d'horloge.

7. Procédé selon une des revendications 1 à 6, **caractérisé en ce qu'**un des procédés suivants est utilisé pour acquérir le signal de mesure partiel :

   - échantillonnage de Nyquist,

- échantillonnage entrelacé,
- suréchantillonnage, de préférence avec filtrage passe-bas numérique.

8. Procédé selon une des revendications 1 à 7, **caractérisé en ce que** la génération des composantes de signal de test et le traitement des signaux de mesure partiels ont lieu en utilisant une source d'horloge commune, notamment en utilisant des diviseurs d'horloge (120) à pas différents, pour générer des séquences M sur un intervalle de fréquence largement multiplié des sous-bandes.

9. Procédé selon une des revendications 1 à 8, **caractérisé en ce que** les fréquences des composantes de signal de test se superposent partiellement aux limites des sous-bandes adjacentes.

10. Procédé selon une des revendications 1 à 9, **caractérisé en ce que** la bande passante prédéterminée (b) du signal de test est divisée en au moins K sous-bandes des composantes de signal de test, de préférence avec $K \geq 4$.

11. Procédé selon une des revendications 1 à 10, **caractérisé en ce que** l'acquisition de la réaction de l'objet à tester excité à l'étape iii. est effectuée en réalisant une seule mesure de tension.

12. Système de mesure pour effectuer une mesure par spectroscopie d'impédance sur un objet à tester (130), comprenant :

   - un générateur d'horloge (11) pour générer un signal d'horloge ($f_c$) ;
   - un diviseur d'horloge (12), pour diviser le signal d'horloge en au moins deux composantes de signal d'horloge ;
   - au moins deux canaux de mesure fonctionnant en parallèle, qui sont respectivement synchronisés avec une composante de signal d'horloge, dans lequel chaque canal de mesure comprend :

      o un registre à décalage à rétroaction linéaire (13) (LFSR), qui génère un signal de test partiel dans une sous-bande sous la forme d'une séquence de pseudo-bruit binaire,
      o un environnement de mesure (15) avec un capteur, qui acquiert un signal de mesure partiel dans la sous-bande du canal de mesure au niveau de l'objet à tester (130),
      o un convertisseur analogique-numérique (16) (CAN), qui convertit le signal de mesure partiel,
      o un filtre pour limiter la bande passante du signal de mesure partiel respectif ;

   - une unité de traitement (17), qui reçoit les signaux de mesure partiels provenant des canaux de mesure et les combine en un signal de mesure avec un axe de fréquence quasi-logarithmique en appliquant une transformée de Fourier parallèle.

13. Système de mesure selon la revendication 12, **caractérisé en ce qu'**il est configuré pour mettre en œuvre un procédé selon une des revendications 1 à 11.

14. Système de mesure selon la revendication 12, comprenant en outre :

   - un boîtier d'appareil ;
   - une électronique de capteur pour le traitement du signal de mesure partiel fourni par les électrodes du capteur ;
   - une entrée de mesure, à laquelle peut être connecté, de manière sélective, soit l'objet à tester (130), soit un élément d'étalonnage externe ;
   - au moins trois éléments de référence internes différents, qui sont intégrés au boîtier d'appareil ;
   - un sélecteur de point de mesure à au moins quatre pôles, qui connecte de manière sélective l'entrée de mesure ou un des éléments de référence internes à l'électronique de capteur ;

   dans lequel l'unité de calcul (17) est configurée pour mettre en œuvre un procédé selon une des revendications 2 à 11 et pour déterminer et mémoriser une matrice d'erreur T ainsi que les paramètres des éléments de référence.

15. Système de mesure selon la revendication 14, **caractérisé en ce qu'**il est configuré pour des mesures de tension monocanal.

Fig. 1

**Fig. 2**

Fig. 3

**Fig. 4**

EP 4 634 651 B1

Fig. 5

Fig. 6

**Fig. 7**

**Fig. 8**

**Fig. 9**

**Fig. 10**

Fig. 11

EP 4 634 651 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015122926 A1
- DE 19828682 A1
- US 2017071552 A1

**In der Beschreibung aufgeführte Nicht-Patentliteratur**

- **J. SACHS**. Handbook of Ultra-Wideband Short-Range Sensing - Theory, Sensors, Applications. Wiley-VCH, 2012